(19) Europäisches Patentamt
European Patent Office
Office européen des brevets

(11) **EP 3 505 979 B1**

(12) **EUROPEAN PATENT SPECIFICATION**

(45) Date of publication and mention
of the grant of the patent:
**19.05.2021 Bulletin 2021/20**

(51) Int Cl.:
**G02B 1/111** *(2015.01)*　　**B32B 3/30** *(2006.01)*
**B32B 7/02** *(2019.01)*　　**B32B 27/26** *(2006.01)*
**G02B 5/02** *(2006.01)*

(21) Application number: **17868216.7**

(22) Date of filing: **01.11.2017**

(86) International application number:
**PCT/JP2017/039540**

(87) International publication number:
**WO 2018/084179 (11.05.2018 Gazette 2018/19)**

(54) **ANTI-GLARE AND ANTI-REFLECTIVE TRANSPARENT SUBSTRATE AND METHOD FOR MANUFACTURING SAME**

TRANSPARENTES SUBSTRAT MIT BLEND- UND REFLEXIONSSCHUTZ UND VERFAHREN ZUR HERSTELLUNG DAVON

SUBSTRAT TRANSPARENT ANTIRÉFLECHISSANT ET ANTIRÉFLECHISSANT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2016 JP 2016217349**

(43) Date of publication of application:
**03.07.2019 Bulletin 2019/27**

(73) Proprietor: **Fukuvi Chemical Industry Co., Ltd.**
**Fukui-shi, Fukui 918-8585 (JP)**

(72) Inventors:
• **YANAGAWA, Yukihiro**
**Itako-shi**
**Ibaraki 311-2423 (JP)**

• **SAITO, Masahiro**
**Sakai-shi**
**Fukui 919-0506 (JP)**
• **NOMURA, Shinichi**
**Sakai-shi**
**Fukui 919-0506 (JP)**
• **MATSUZAKI, Yuya**
**Sakai-shi**
**Fukui 919-0506 (JP)**

(74) Representative: **Regimbeau**
**20, rue de Chazelles**
**75847 Paris Cedex 17 (FR)**

(56) References cited:
**WO-A1-2013/153648**　　**WO-A1-2013/153648**
**JP-A- 2004 029 240**　　**JP-A- 2004 333 936**
**JP-A- 2011 208 102**　　**US-A1- 2003 234 460**

**Description**

Technical Field

The present invention relates to a transparent substrate having anti-glare properties and anti-reflective properties, and a method for manufacturing the same.

Priority is claimed on Japanese Patent Application No. 2016-217349, filed on November 7, 2016.

Background Art

In many cases, the entire panel of the display surface of an image display device such as a liquid crystal display device (LCD), a plasma display (PDP), an electroluminescence display (ELD), or a cathode-ray tube display device (CRT), a vehicle control panel, a navigation panel, and the like, is provided with an anti-reflective film.

As the anti-reflective film, a film having a structure in which several layers of interference films having different refractive indexes are laminated on a base material is known, and is usually manufactured by a method such as a vacuum deposition method, a sputtering method, or a coating method. An anti-reflective film is known in which an uneven structure is formed on the surface of the film by dispersing fine particles in the material of the film or transferring unevenness of a die onto the film surface using the die such as an embossed plate.

In recent years, a film having anti-glare properties imparted to an anti-reflective film has been proposed. For example, Patent Document 1 discloses a method for manufacturing an anti-glare film by forming unevenness on one surface of a polymer film having an anti-reflective layer while heating the surface using an embossed plate which is produced by electrical discharge machining and has an arithmetic mean roughness Ra of 0.3 to 1.0 $\mu$m and a mean unevenness period RSm of 5 to 30 $\mu$m on the surface.

Citation List

Patent Document

[Patent Document 1] Japanese Unexamined Patent Application, First Publication No. 2004-33393. Other patent documents : US 2003/0234460 A1 and WO 2013/153648 A1.

Summary of Invention

Technical Problem

However, as described in Patent Document 1, when unevenness is formed on the anti-reflective layer while heating using the embossed plate, the anti-reflective layer itself may be damaged or the uneven structure formed in advance on the surface of the anti-reflective layer may be damaged, so that the original function (anti-reflective properties) of the anti-reflective layer may be damaged. Furthermore, the anti-reflective properties are unstably exhibited, and the surface looks glaring (glossy) in some cases.

As a method of imparting anti-glare properties to an anti-reflective film, a method of forming, using a coating method or the like, an anti-reflective layer on a processed surface of a base material to which anti-glare properties are imparted by roughening the surface in advance is also conceivable.

However, in this method, it is difficult to apply a coating solution to follow the uneven shape of the processed surface, and the recessed portions are filled with the coating solution more than necessary. As a result, the inclination of the unevenness becomes gentle, and it becomes difficult to exhibit desired anti-glare properties.

An object of the present invention is to provide a transparent substrate having anti-glare properties and anti-reflective properties, according to claim 1, and a method for manufacturing the same, according to claim 6.

Solution to Problem

The present invention is according to claims 1 and 6.

Effects of Invention

The transparent substrate of the present invention has anti-glare properties and anti-reflective properties.

According to the method for manufacturing a transparent substrate of the present invention, a transparent substrate having anti-glare properties and anti-reflective properties can be manufactured.

Brief Description of Drawings

FIG. 1 is a sectional view illustrating an example of a transparent substrate of the present invention.
FIG. 2 is a sectional view illustrating an example of a manufacturing process of the transparent substrate illustrated in FIG. 1.
FIG. 3 is a sectional view illustrating another example of the transparent substrate of the present invention.

Description of Embodiments

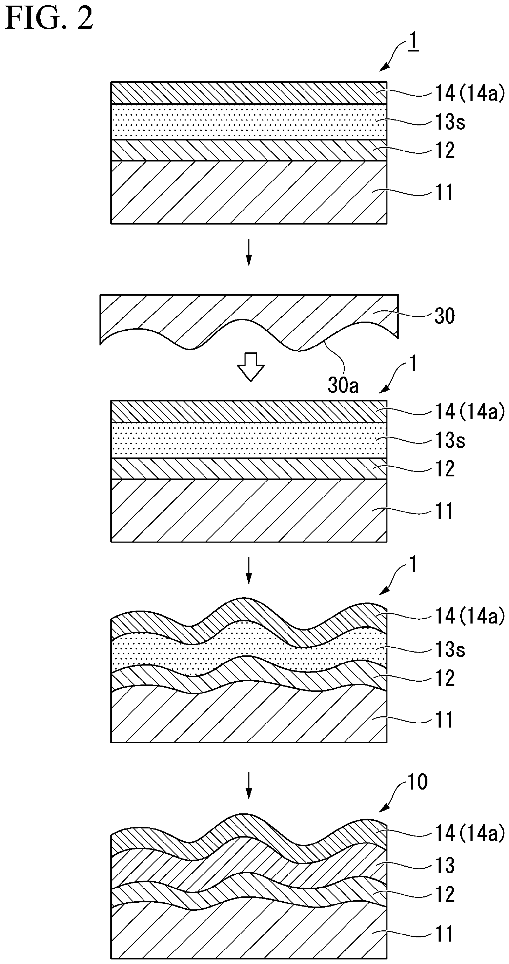

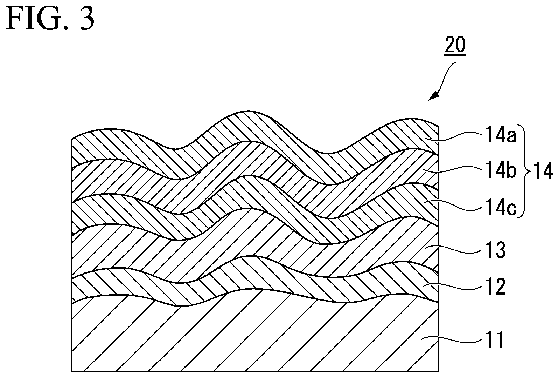

Hereinafter, the present invention will be described in detail.
In this specification, "(meth)acrylate" is a generic term for acrylate and methacrylate.

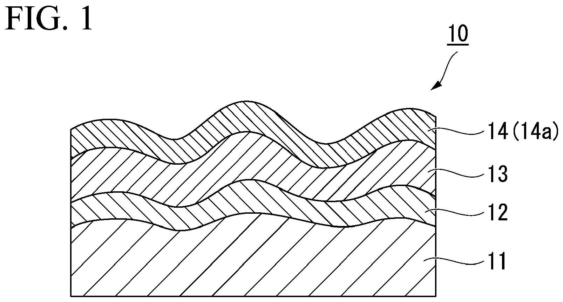

In FIGS. 1 to 3, in order to cause each layer to be recognizable on the drawings, the scale of each layer varies.
In addition, in FIGS. 2 and 3, like elements which are the same as those in FIG. 1 are denoted by like reference numerals, and the description thereof will be omitted.

"Transparent Substrate"

FIG. 1 is a sectional view illustrating an example of a transparent substrate of the present invention.
A transparent substrate 10 of an embodiment includes a base material 11 having light-transmitting properties, a barrier layer 12 provided on the base material 11, a buffer layer 13 provided on the barrier layer 12, and an anti-reflective layer 14 provided on the buffer layer 13.
As will be described in detail later, as illustrated in FIG. 2, the transparent substrate 10 is formed by fully curing a semi-cured product layer 13s of an intermediate laminate 1 including the base material 11, the barrier layer 12 provided on the base material 11, the semi-cured product layer 13s which is provided on the barrier layer 12 and is made of a semi-cured product of an ultraviolet-curable resin composition, and the anti-reflective layer 14 provided on the semi-cured product layer 13s. That is, the buffer layer 13 is formed by fully curing the semi-cured product layer 13s (a fully-cured product of the semi-cured product layer 13s).
As illustrated in FIG. 1, the transparent substrate 10 has an irregular uneven structure on the surface of the anti-reflective layer 14. By having the irregular uneven structure on the surface of the anti-reflective layer 14, anti-glare properties are exhibited.
Here, the "irregular uneven structure" means that a plurality of recessed portions and protruding portions with different shapes, dimensions, and the like are formed in an irregular arrangement pattern (intervals).
The arithmetic mean roughness Ra of the surface of the uneven structure is 0.01 to 1.00 $\mu$m, and is preferably 0.03 to 0.50 $\mu$m. When the arithmetic mean roughness Ra is 0.01 $\mu$m or more, sufficient anti-glare properties can be exhibited. On the other hand, when the arithmetic mean roughness Ra is 1.00 $\mu$m or less, glariness is less likely to be caused.
The arithmetic mean height Sa of the surface of the uneven structure is preferably 0.01 to 1.25 $\mu$m, and more preferably 0.03 to 0.60 $\mu$m. When the arithmetic mean height Sa is 0.01 $\mu$m or more, sufficient anti-glare properties can be exhibited. On the other hand, when the arithmetic mean height Sa is 1.25 $\mu$m or less, glariness is less likely to be caused.
The mean unevenness period RSm of the surface of the uneven structure is 1 to 30 $\mu$m, and is preferably 5 to 15 $\mu$m. When the mean unevenness period RSm is 1 $\mu$m or more, sufficient anti-glare properties can be exhibited. On the other hand, when the mean unevenness period RSm is 30 $\mu$m or less, glariness is less likely to be caused.
In the present invention, the arithmetic mean roughness Ra, the arithmetic mean height Sa, and the mean unevenness period RSm are values measured according to ISO 25178, and can be measured using a commercially available surface texture measuring machine. As such a measuring instrument, for example, a shape analysis laser microscope can be adopted.

<Base Material>

The base material 11 has light-transmitting properties, and is made of, for example, a thermoplastic resin having a total light transmittance of 85% or more at a wavelength of 750 to 400 nm. As such a thermoplastic resin having light-transmitting properties, an acrylic resin typified by polymethyl methacrylate, a polycarbonate resin, a polyethylene terephthalate resin, a poly allyl diglycol carbonate resin, a polystyrene resin and the like are suitable.
It is preferable that the surface of the base material 11 on the side where the anti-reflective layer 14 is formed is formed of an acrylic resin, a polycarbonate resin, or a polyethylene terephthalate resin. Therefore, a laminate of a polycarbonate resin and an acrylic resin can also be suitably used as the base material 11.

The base material 11 may be colored with an oil-soluble dye or the like as long as the light-transmitting properties are not impaired.

Furthermore, the surface of the base material 11 on the side where the anti-reflective layer 14 is formed may be surface treated with a known primer itself for the purpose of improving the adhesion between the base material 11 and the adjacent layer.

The thickness of the base material 11 is not particularly limited as long as unevenness is formed at the thickness. However, it is generally preferable that the thickness is appropriately thin, and for example, about 30 to 1000 $\mu$m.

<Barrier Layer>

The barrier layer 12 imparts chemical resistance to the transparent substrate 10 and plays a role of preventing swelling of the base material 11 by chemicals when the transparent substrate 10 is exposed to chemicals such as brake oil.

The barrier layer 12 contains a tetra- or higher functional urethane acrylate. The tetra- or higher functional urethane acrylate forms a hard portion by curing. Therefore, the transparent substrate 10 including the barrier layer 12 has high chemical resistance.

The tetra- or higher functional urethane acrylate is, among products (reaction products of a terminal isocyanate compound and a hydroxyl group-containing (meth)acrylate) obtained by further reacting a terminal isocyanate compound, which is a reaction product of a polyvalent isocyanate compound and a polyol compound having a plurality of hydroxyl groups, with a hydroxyl group-containing (meth)acrylate, a product having four or more (meth)acryloyl groups.

For example, a product obtained by introducing two (meth)acryloyl groups into each of both terminals of an isocyanate compound by reacting pentaerythritoldi(meth)acrylate with a terminal isocyanate compound is used as a tetrafunctional urethane acrylate. In addition, a product obtained by introducing three (meth)acryloyl groups into each of molecular chain terminals by reacting pentaerythritol tri(meth)acrylate with a both terminal isocyanate (for example, trihexadiethylene diisocyanate) is used as a hexafunctional urethane acrylate.

Examples of the polyvalent isocyanate compound contained in the tetra- or higher functional urethane acrylate include: aliphatic diisocyanates such as ethylene diisocyanate, propylene diisocyanate, butylene diisocyanate, pentamethylene diisocyanate and hexamethylene diisocyanate; alicyclic diisocyanates such as isophorone diisocyanate, 4,4'-methylenebis (cyclohexyl isocyanate) and $\omega,\omega'$-diisocinate dimethylcyclohexane; and aliphatic diisocyanates having an aromatic ring such as tolylene diisocyanate, xylylene diisocyanate, and $\alpha,\alpha,\alpha',\alpha'$-tetramethylxylylene diisocyanate.

These may be used singly, or may be used in combination of two or more thereof.

Examples of the polyol compound contained in the tetra- or higher functional urethane acrylate include glycerin, diglycerin, triglycerol, trimethylolethane, trimethylolpropane, sorbitol, pentaerythritol, ditrimethylolpropane, dipentaerythritol, tripentaerythritol, and adamantane triol.

These may be used singly, or may be used in combination of two or more thereof.

Examples of the hydroxyl group-containing (meth)acrylate contained in the tetra- or higher functional urethane acrylate include pentaerythritol di(meth)acrylate, pentaerythritol tri(meth)acrylate, and dipentaerythritol penta(meth)acrylate.

These may be used singly, or may be used in combination of two or more thereof.

The percent elongation of the barrier layer 12 is preferably the same as the percent elongation of the semi-cured product layer 13s described later.

The percent elongation of the barrier layer 12 is obtained as follows.

That is, a test piece having a barrier layer formed on a base material is heated to a temperature close to Tg of the base material, and then interposed between L-shaped bending male and female dies with the base material surface being on the recessed portion side, and the male and female dies are pressed against each other and cooled. After the cooling, the bent protruding surface is observed with a microscope, and the presence or absence of cracks is checked. The same operation is performed by changing the bend radius (bend R), and the percent elongation until the bend R at which no crack is generated is calculated.

The thickness of the barrier layer 12 is preferably 50 to 200 nm, and more preferably 60 to 150 nm. When the thickness of the barrier layer 12 is 50 nm or more, sufficient hardness and chemical resistance can be obtained. The effect of the barrier layer such as chemical resistance tends to be more easily obtained as the barrier layer becomes thicker. However, the effect reaches its limit when the thickness exceeds 200 nm. From the viewpoint of the balance between the effect such as chemical resistance and the overall thickness of the transparent substrate 10, the thickness of the barrier layer 12 is preferably 200 nm or less.

<Buffer Layer>

The buffer layer 13 is one (a fully-cured product of the semi-cured product layer 13s) obtained by fully curing the semi-cured product layer 13s, which will be described later.

(Semi-Cured Product Layer)

The semi-cured product layer 13s plays a role of a cushioning material when the surface of anti-reflective layer 14 is processed into an uneven shape. As will be described later in detail, the uneven shape of the surface of the anti-reflective layer 14 is formed by shaping unevenness on the surface of the anti-reflective layer 14 of the intermediate laminate 1 using a transfer mold having an uneven structure on the transfer surface. Since the intermediate laminate 1 includes the semi-cured product layer 13s, an external force applied to the anti-reflective layer 14 is absorbed by the semi-cured product layer 13s during the transfer process even when the surface of the anti-reflective layer 14 is processed into the uneven shape. Therefore, anti-reflective layer 14 can be prevented from being damaged, and the original function (anti-reflective properties) of the anti-reflective layer 14 can be properly maintained.

The semi-cured product layer 13s is made of a semi-cured product of the ultraviolet-curable resin composition.

In the present invention, "semi-cured" indicates a state before the ultraviolet-curable resin composition is completely cured, and furthermore, a state in which a curing reaction can proceed. Specifically, "semi-cured" indicates a state in which 60% to 90% of the curing reaction of the ultraviolet-curable resin composition is completed.

The Young's modulus of the semi-cured product layer 13s is 0.1 to 2.5GPa, preferably 0.3 to 2.0 GPa, and more preferably 0.4 to 1.5 GPa. When the Young's modulus of the semi-cured product layer 13s is 0.1 GPa or more, it is possible to form an anti-reflective layer on the semi-cured product layer 13s, and the anti-reflective properties can be maintained. On the other hand, when the Young's modulus of the semi-cured product layer 13s is 2.5 GPa or less, the pressure when the surface of the anti-reflective layer 14 is processed into the uneven shape (during the transfer process) can be sufficiently absorbed.

In the present invention, the Young's modulus is a value expressed by the slope of the linear portion of a stress-strain curve when the stress-strain curve is drawn by conducting a bending test under conditions of a temperature of 23°C and a speed of 1 mm/min according to Japanese Industrial Standards JIS K 7171.

The percent elongation of the semi-cured product layer 13s is preferably 105% to 200%, more preferably 108% to 180%, and even more preferably 115% to 160%. When the percent elongation of the semi-cured product layer 13s is 105% or more, the pressure when the surface of the anti-reflective layer 14 is processed into the uneven shape (during the transfer process) can be further absorbed. On the other hand, when the percent elongation of the semi-cured product layer 13s is 200% or less, it is possible to form an anti-reflective layer on the semi-cured product layer 13s, and the anti-reflective properties can be held.

The percent elongation of the semi-cured product layer 13s is obtained as follows.

That is, a test piece having a semi-cured product layer formed on a base material is heated to a temperature close to Tg of the base material, and then interposed between L-shaped bending male and female dies with the base material surface being on the recessed portion side, and the male and female dies are pressed against each other and cooled. After the cooling, the bent protruding surface is observed with a microscope, and the presence or absence of cracks is checked.

The same operation is performed by changing the bend radius (bend R), and the percent elongation until the bend R at which no crack is generated is calculated.

The ultraviolet-curable resin composition preferably contains a tri- or lower functional urethane acrylate, a silane coupling agent, and a metal chelate compound.

Furthermore, it is more preferable that the ultraviolet-curable resin composition further contains silica particles or a tetra- or higher functional urethane acrylate.

The tri- or lower functional urethane acrylate is, among products (reaction products of a terminal isocyanate compound and a hydroxyl group-containing (meth)acrylate) obtained by further reacting a terminal isocyanate compound, which is a reaction product of a polyvalent isocyanate compound and a polyol compound having a plurality of hydroxyl groups, with a hydroxyl group-containing (meth)acrylate, a product having three or lower (meth)acryloyl groups. A urethane acrylate having one (meth)acryloyl group is monofunctional (monofunctional), a urethane acrylate having two (meth)acryloyl groups is difunctional, and a urethane acrylate having three (meth)acryloyl groups is trifunctional.

For example, a product obtained by introducing one (meth)acryloyl group into each of both terminals of an isocyanate compound by reacting pentaerythritolmono(meth)acrylate with a terminal isocyanate compound is used as a difunctional urethane acrylate. In addition, a product obtained by introducing one (meth)acryloyl group into one terminal of an isocyanate compound and introducing two (meth)acryloyl groups into the other terminal thereof by reacting pentaerythritolmono(meth)acrylate and pentaerythritoldi(meth)acrylate with a terminal isocyanate compound is used as a trifunctional urethane acrylate.

As the polyvalent isocyanate compound and the polyol compound contained in the tri- or lower functional urethane acrylate, the polyvalent isocyanate compounds and the polyol compounds exemplified above in the description of the tetra- or higher functional urethane acrylate can be adopted.

Examples of the hydroxyl group-containing (meth)acrylate contained in the tri- or lower functional urethane acrylate include pentaerythritol mono(meth)acrylate, pentaerythritol di(meth)acrylate, and phenylglycidyl ether(meth)acrylate.

These may be used singly, or may be used in combination of two or more thereof.

As the tetra- or higher functional urethane acrylate, the tetra- or higher functional urethane acrylates exemplified above in the description of the barrier layer 12 can be adopted.

The tri- or lower functional urethane acrylate forms a portion that has relatively sufficient flexibility through curing, and the tetra- or higher functional urethane acrylate forms a hard portion by curing. Therefore, using both, the buffer layer 13 is moderately dense has hardness can be formed.

The amount of the tri- or lower functional urethane acrylate with respect to the total mass of all urethane acrylates contained in the ultraviolet-curable resin composition is preferably 5 mass% or more, and the amount of the tetra- or higher functional is preferably 95 mass% or less. When the amount of the tri- or lower functional urethane acrylate is 5 mass% or more, the adhesion between the semi-cured product layer 13s and the base material 11 is enhanced, and the ability of the semi-cured product layer 13s to follow the base material 11 is not easily impaired. As a result, cracking and the like are less likely to occur when the transparent substrate 10 is subjected to pressure shaping. In addition, in a case where the ultraviolet-curable resin composition contains silica particles, falling of the silica particles can be suppressed. On the other hand, when the amount of the tetra- or higher urethane acrylate is 95 mass% or less, the hardness of the buffer layer 13 can be properly maintained.

The amount of the tri- or lower functional urethane acrylate is preferably 5 to 100 mass% and more preferably 12 to 90 mass%, and the amount of the tetra- or higher functional urethane acrylate is preferably 0 to 95 mass% and more preferably 10 to 88 mass %.

The silane coupling agent is a component that enhances the adhesion to the base material 11 and the anti-reflective layer 14. In a case where the ultraviolet-curable resin composition contains silica particles, silane coupling agent is also a component that suppresses falling of the silica particles so as to cause the silica particles to be stably dispersed and held.

As the silane coupling agent, a compound represented by General Formula (1) can be adopted.

$$R^1_n\text{-}Si(OR^2)_{4-n} \ldots \qquad (1)$$

In Formula (1), $R^1$ is an alkyl group or an alkenyl group, $R^2$ is an alkyl group, an alkoxyalkyl group, an acyloxy group, or a halogen atom, and n is a number 1 or 2.

As $R^1$, an alkyl group such as a methyl group, an ethyl group and a propyl group, and an alkenyl group such as a vinyl group can be exemplified. The alkyl group may be substituted with a halogen atom such as chlorine, or a functional group such as a mercapto group, an amino group, a (meth)acryloyl group or oxirane ring-containing group.

Further, the group $R^2$ is an alkyl group, an alkoxyalkyl group, an acyloxy group or a halogen atom, and $OR^2$ bonded to the silicon atom is a hydrolyzable group.

Examples of the compound represented by Formula (1) include vinyltrichlorosilane, vinyltris(β-methoxyethoxy)silane, vinyltriethoxysilane, vinyltrimethoxysilane, vinyltriacetoxysilane, γ-(meth)acryloxypropyltrimethoxysilane, γ-glycidoxypropyltrimethoxysilane, β-(3,4-epoxycyclohexyl)ethyltrimethoxysilane, γ-glycidoxypropylmethyldiethoxysilane, γ-aminopropyltriethoxysilane, γ-aminopropylmethyldimethoxysilane, N-(β-aminoethyl)-γ-aminopropyltrimethoxysilane, γ-anilinopropyltrimethoxysilane, γ-(N-styrylmethyl-β-aminoethylamino)propyltrimethoxysilane hydrochloride, γ-chloropropyltrimethoxysilane, γ-mercaptopropyltrimethoxysilane, methyltrimethoxysilane, methyltrichlorosilane, and dimethyldichlorosilane.

These may be used singly, or may be used in combination of two or more thereof.

The silane coupling agent undergoes polycondensation simultaneously with hydrolysis and forms a polymer linked into a network by Si-O-Si bonds. Therefore, using the silane coupling agent, the buffer layer 13 can be densified.

At least a portion of the silane coupling agent is present as hydrolysate in the semi-cured product layer 13s or the buffer layer 13.

The amount of the silane coupling agent with respect to 100 parts by mass of all urethane acrylates contained in the ultraviolet-curable resin composition is preferably 1 to 30 parts by mass, and more preferably 10 to 15 parts by mass. When the amount of the silane coupling agent is 1 part by mass or more, the adhesion to the base material 11 and the anti-reflective layer 14 is enhanced, and peeling-off of the semi-cured product layer 13s or the buffer layer 13 can be suppressed. On the other hand, when the amount of the silane coupling agent is 30 parts by mass or less, the basic performance of the semi-cured product layer 13s (absorption of an external force applied to the anti-reflective layer 14) can be sufficiently exhibited.

The metal chelate compound is used for introducing a crosslinked structure into the semi-cured product layer 13s and making the semi-cured product layer 13s or the buffer layer 13 denser. The tri- or lower functional urethane acrylate described above imparts flexibility, but tends to reduce denseness. The metal chelate compound compensates for the reduction in denseness without impairing the flexibility of the semi-cured product layer 13s. In other words, the metal chelate compound is used to adjust mechanical properties which are influenced by the denseness of the film, such as hardness. In particular, if the anti-reflective layer 14, which will be described later, also contains a metal chelate compound, the adhesion between the semi-cured product layer 13s or the buffer layer 13 and the anti-reflective layer 14 can be further enhanced, and cracking and the like occurring when the transparent substrate 10 is subjected to pressure shaping can be effectively prevented.

As the metal chelate compound, a titanium, zirconium, aluminum, tin, niobium, tantalum, or lead compound containing a bidentate ligand is suitable.

A bidentate ligand is a chelating agent having a coordination number of 2, that is, having two atoms capable of being coordinated to a metal, and generally forms a chelate compound by forming a 5- to 7-membered ring by O, N, and S atoms. Examples of the bidentate ligand include acetylacetonato, ethylacetoacetato, diethylmalonato, dibenzoylmethanato, salicylato, glycolato, catecholato, salicylaldehydato, oxyacetophenonato, biphenolato, pyromeconato, oxynaphthoquinol, oxyanthraquinonato, tropolonato, binokichilato, glycinato, alaninato, anthroninato, picolinato, aminophenolato, ethanolaminato, mercaptoethylamminato, 8-oxyquinolinato, salicylaldiminato, benzoinoximato, salicylaldoxima-to, oxyazobenzenato, phenylazonaphtholato, $\beta$-nitroso-$\alpha$-naphtholato, diazoaminobenzenato, biuretato, diphenylcarba-zonato, diphenylthiocarbazonato, biguanidato, dimethylglyoxymato, and the like.

As the metal chelate compound, a compound represented by General Formula (2) is preferable.

$$M^1(Li)_k(X)_{m-k} \qquad (2)$$

In Formula (2), $M^1$ is titanium, zirconium, aluminum, tin, niobium, tantalum, or lead, Li is a bidentate ligand, X is a monovalent group, m is the valence of $M^1$, and, and k is a number of 1 or more in a range of not more than the valence of $M^1$.

As $M^1$, titanium, zirconium, and aluminum, and preferable.

As X, a hydrolyzable group is preferable, and particularly an alkoxy group is preferable.

Examples of the metal chelate compound represented by Formula (2) include a Ti chelate compound, a Zr chelate compound, and an Al chelate compound.

Specific examples of the Ti chelate compound include triethoxymono(acetylacetonato)titanium, tri-n-propoxymono(acetylacetonato)titanium, tri-i-propoxymono(acetylacetonato)titanium, tri-n-butoxymono(acetylacetonato)titanium, tri-sec-butoxymono(acetylacetonato)titanium, tri-t-butoxymono(acetylacetonato)titanium, diethoxybis(acetylace-nato)titanium, di-n-propoxybis(acetylacetonato)titanium, di-i-propoxybis(acetylacetonato)titanium, di-n-butoxybis(acetyl-lacetonato)titanium, di-sec-butoxybis(acetylacetonato)titanium, di-t-butoxybis(acetylacetonato)titanium, monoethoxytris(acetylacetonato)titanium, mono-n-propoxytris(acetylacetonato)titanium, mono-i-propoxytris(acetylacetonato)titanium, mono-n-butoxytris(acetylacetonato)titanium, mono-sec-butoxytris(acetylacetonato)titanium, mono-t-butoxytris(acetylacetonato)titanium, tetrakis(acetylacetonato)titanium, triethoxymono(ethylacetoacetato)titanium, tri-n-propoxymono(ethylacetoacetato)titanium, tri-i-propoxymono(ethylacetoacetato)titanium, tri-n-butoxymono(ethylacetoaceta-to)titanium, tri-sec-butoxymono(ethylacetoacetato)titanium, tri-t-butoxymono(ethylacetoacetato)titanium, diethoxybis(ethylacetoacetato)titanium, di-n-propoxybis(ethylacetoacetato)titanium, di-i-propoxybis(ethylacetoaceta-to)titanium, di-n-butoxybis(ethylacetoacetato)titanium, di-sec-butoxybis(ethylacetoacetato)titanium, di-t-butoxybis(ethylacetoacetato)titanium, monoethoxytris(ethylacetoacetato)titanium, mono-n-propoxytris(ethylacetoacetato)titanium, mono-i-propoxytris(ethylacetoacetato)titanium, mono-n-butoxytris(ethylacetoacetato)titanium, mono-sec-butoxytris(ethyl acetoacetato)titanium, mono-t-butoxytris(ethylacetoacetato)titanium, tetrakis(ethylacetoacetato)titanium, mono(acetylacetonato)tris(ethylacetoacetato)titanium, bis(acetylacetonato)bis(ethylacetoacetato)titanium, and tris(acetyl-lacetonato)mono(ethylacetoacetato)titanium.

These may be used singly, or may be used in combination of two or more thereof.

Specific examples of the Zr chelate compound include triethoxymono(acetylacetonato)zirconium, tri-n-propoxymono(acetylacetonato)zirconium, tri-i-propoxymono(acetylacetonato)zirconium, tri-n-butoxymono(acetylacetonato)zirconium, tri-sec-butoxymono(acetylacetonato)zirconium, tri-t-butoxymono(acetylacetonato)zirconium, diethoxy-bis(acetylacetonato)zirconium, di-n-propoxybis(acetylacetonato)zirconium, di-i-propoxybis(acetylacetonato)zirconium, di-n-butoxybis(acetylacetonato)zirconium, di-sec-butoxybis(acetylacetonato)zirconium, di-t-butoxybis(acetylacetonato)zirconium, monoethoxytris(acetylacetonato)zirconium, mono-n-propoxytris(acetylacetonato)zirconium, mono-i-propoxytris(acetylacetonato)zirconium, mono-n-butoxytris(acetylacetonato)zirconium, mono-sec-butoxytris(acetylacetonato)zirconium, mono-t-butoxytris(acetylacetonato)zirconium, tetrakis(acetylacetonato)zirconium, triethoxymono(ethylacetoacetato)zirconium, tri-n-propoxymono(ethylacetoacetato)zirconium, tri-i-propoxymono(ethylacetoaceta-to)zirconium, tri-n-butoxymono(ethylacetoacetato)zirconium, tri-sec-butoxymono(ethylacetoacetato)zirconium, tri-t-butoxymono(ethylacetoacetato)zirconium, diethoxy-bis(ethylacetoacetato)zirconium, di-n-propoxybis(ethylacetoaceta-to)zirconium, di-i-propoxybis(ethylacetoacetato)zirconium, di-n-butoxybis(ethylacetoacetato)zirconium, di-sec-butoxy-bis(ethylacetoacetato)zirconium, di-t-butoxybis(ethylacetoacetato)zirconium, monoethoxytris(ethylacetoacetato)zirconium, mono-n-propoxytris(ethylacetoacetato)zirconium, mono-i-propoxytris(ethylacetoacetato)zirconium, mono-n-butoxytris(ethylacetoacetate)zirconium, mono-sec-butoxytris(ethylacetoacetato)zirconium, mono-t-butoxytris(ethylacetoacetato)zirconium, tetrakis(ethylacetoacetato)zirconium, mono(acetylacetonato)tris(ethylacetoacetato)zirconium, bis(acetylacetonato)bis(ethylacetoacetato)zirconium, and tris(acetylacetonato)mono(ethylacetoacetato)zirconium.

These may be used singly, or may be used in combination of two or more thereof.

Specific examples of the Al chelate compound include diethoxymono(acetylacetonato)aluminum, monoethoxy-bis(acetylacetonato)aluminum, di-i-propoxymono(acetylacetonato)aluminum, mono-i-propoxybis(acetylacetonato)aluminum, mono-i-propoxybis(ethylacetoacetato)aluminum, monoethoxybis(ethylacetoacetato)aluminum, diethoxymono(ethylacetoacetato)aluminum, and di-i-propoxymono(ethylacetoacetato)aluminum.

These may be used singly, or may be used in combination of two or more thereof.

The amount of the metal chelate compound with respect to 100 parts by mass of all urethane acrylates contained in the ultraviolet-curable resin composition is preferably 0.1 to 3.0 parts by mass, and more preferably 0.5 to 1.5 parts by mass. When the amount of the metal chelate compound is within the above range, the adhesion to the anti-reflective layer 14 is improved.

The silica particles are a component that increases the adhesion to the anti-reflective layer 14 and effectively suppress cracking and the like of the buffer layer 13 or the anti-reflective layer 14 when the transparent substrate 10 is subjected to pressure shaping.

As the silica particles contained in the ultraviolet-curable resin composition, solid colloidal silica (solid silica sol) can be used. Here, "solid" means a density of 1.9 g/cm$^3$ or more.

The average particle size of the solid silica sol is preferably 5 to 500 nm. When the average particle size of the solid silica sol is within the above range, properties such as hardness can be uniformly imparted to the entire semi-cured product layer 13s.

The refractive index of the solid silica sol is preferably 1.44 to 1.50. When the refractive index of the solid silica sol is within the above range, properties such as hardness can be uniformly imparted to the entire semi-cured product layer 13s.

The solid silica sol is commercially available in the form of a sol in which, for example, solid silica particles are dispersed in an organic solvent such as isopropanol or methyl isobutyl ketone.

The amount of the silica particles with respect to 100 parts by mass of all urethane acrylates contained in the ultraviolet-curable resin composition is preferably 80 parts by mass or less, more preferably 10 to 60 parts by mass, and even more preferably 20 to 50 parts by mass. When the amount of the silica particles is within the above range, the adhesion to the anti-reflective layer 14 can be enhanced while maintaining the basic properties of the semi-cured product layer 13s, and cracking and the like occurring when the transparent substrate 10 is subjected to pressure shaping can be effectively prevented.

The thickness of the semi-cured product layer 13s after being fully cured, that is, the thickness of the buffer layer 13 is 1.0 to 10.0 μm, preferably 1.2 to 8.5 μm, and more preferably 1.5 5.0 μm, and even more preferably 1.5 to 3.0 μm. When the thickness of the semi-cured product layer 13s after being fully cured is 1.0 μm or more, the basic performance of the semi-cured product layer 13s (absorption of an external force applied to the anti-reflective layer 14) can be sufficiently exhibited. On the other hand, when the thickness of the semi-cured product layer 13s after being fully cured is 10.0 μm or less, an increase in the difference in physical properties (for example, flexibility and elongation) from the base material 11 can be suppressed, and cracking and the like during shaping of unevenness by transfer can be effectively prevented. The uneven structure of the transfer surface of the transfer mold can be sufficiently transferred (that is, the transfer ratio is high).

<Anti-reflective layer>

The anti-reflective layer 14 has a low refractive index layer 14a having a refractive index of 1.47 or less and a thickness of 50 to 200 nm as the outermost layer. The anti-reflective layer 14 illustrated in FIGS. 1 and 2 has a single layer structure and is composed only of the low refractive index layer 14a.

The low refractive index layer 14a preferably contains silica particles, a silane coupling agent or a hydrolysate thereof, and a metal chelate compound. With such a configuration, the silane coupling agent or the hydrolysate thereof serves as a binder and holds fine silica particles. In addition, when the low refractive index layer 14a is formed using the silane coupling agent or the hydrolysate thereof used for the buffer layer 13, high adhesion is secured between the low refractive index layer 14a and the buffer layer 13, and molding failure occurring when unevenness is shaped by transfer can be effectively prevented.

The silica particles are used for adjusting the physical properties associated with the buffer layer 13.

As the silica particles contained in the low refractive index layer 14a, hollow colloidal silica (hollow silica sol) can be used. Here, "hollow" means a density of 1.5 g/cm$^3$ or less.

The average particle size of the hollow silica sol is preferably from 10 to 150 nm. When the average particle size of the hollow silica sol is within the above range, a certain strength and hardness are secured and properties such as scratch resistance can be imparted without impairing the light-transmitting properties of the base material 11.

The refractive index of the hollow silica sol is preferably less than 1.44. When the refractive index of the hollow silica sol is within the above range, a certain strength and hardness are secured and properties such as scratch resistance can be imparted without impairing the light-transmitting properties of the base material 11.

The hollow silica sol is produced, for example, by synthesizing silica in the presence of a surfactant to be a template and finally calcining the silica to decompose and remove the surfactant and is commercially available in the form of a sol dispersed in an organic solvent such as isopropanol or methyl isobutyl ketone.

As the silane coupling agent and the metal chelate compound, the silane coupling agents and the metal chelate compounds exemplified above in the description of the semi-cured product layer 13s can be adopted.

With respect to the total mass of the sum of the silica particles, the silane coupling agent or the hydrolysate thereof, and the metal chelate compound, the amount of the silica particles is preferably 5 to 50 mass%, the amount of the silane coupling agent or the hydrolysate thereof is preferably 15 to 94 mass%, and the amount of the metal chelate compound is preferably 1 to 35 mass%.

The thickness of the low refractive index layer 14a is 50 to 200 nm. When the thickness of the low refractive index layer 14a is within the above range, sufficient anti-reflective properties can be obtained. In particular, when the thickness of the low refractive index layer 14a is 50 nm or more, properties such as strength can be properly maintained, and breaking or the like is less likely to occur when the transparent substrate 10 is subjected to pressure shaping. On the other hand, when the thickness of the low refractive index layer 14a is 200 nm or less, flexibility can be properly maintained. Therefore, for example, the difference in physical properties from the base material 11 is less likely to increase, and molding failure such as cracking occurring when unevenness is shaped by transfer is less likely to occur.

<Intermediate Laminate>

The percent elongation of the intermediate laminate 1 is 105 to 150%, and more preferably 110 to 130%. When the percent elongation of the intermediate laminate 1 is 105% or more, even if unevenness is shaped on the surface of the anti-reflective layer 14 by transfer, an external force applied to the anti-reflective layer 14 during the transfer process can be effective absorbed by the semi-cured product layer 13s, so that the anti-reflective layer 14 can be prevented from being damaged. Accordingly, the original function (anti-reflective properties) of the anti-reflective layer 14 properly maintained. On the other hand, when the percent elongation of the intermediate laminate 1 is 150% or less, an uneven shape can be sufficiently shaped.

The percent elongation of the intermediate laminate 1 can be adjusted by the percent elongation of the semi-cured product layer 13s, the cumulative light amount of ultraviolet rays in a step (b), which will be described later.

The percent elongation of the intermediate laminate 1 is obtained as follows.

That is, the intermediate laminate is heated to a temperature close to Tg of the base material, and then interposed between L-shaped bending male and female dies with the base material surface being on the recessed portion side, and the male and female dies are pressed against each other and cooled. After the cooling, the bent protruding surface is observed with a microscope, and the presence or absence of cracks is checked. The same operation is performed by changing the bend radius (bend R), and the percent elongation until the bend R at which no crack is generated is calculated.

<Manufacturing Method>

An example of a method for manufacturing the transparent substrate 10 illustrated in FIG. 1 will be described with reference to FIG. 2.

The method of manufacturing the transparent substrate 10 of this embodiment includes steps (a), (b), (c), (d), and (e) as follows.

Step (a): a step of forming a barrier layer containing a tetra- or higher urethane acrylate and having a thickness of 50 to 200 nm, on one surface of a base material having light-transmitting properties.

Step (b): a step of forming a semi-cured product layer on the base material by applying an ultraviolet-curable resin composition onto the barrier layer formed on one surface of the base material having light-transmitting properties and semi-curing the ultraviolet-curable resin composition so as to cause the thickness after full curing to be 1.0 to 10.0 μm.

Step (c): a step of obtaining an intermediate laminate by forming an anti-reflective layer on the semi-cured product layer.

Step (d): a step of, using a transfer mold having an irregular uneven structure on a transfer surface, and having an arithmetic mean roughness Ra of the transfer surface of 0.01 to 1.25 μm and a mean unevenness period RSm of 1 to 30 μm, transferring the uneven structure of the transfer surface onto the surface of the anti-reflective layer of the intermediate laminate.

Step (e): a step of fully curing the semi-cured product layer after the step (d).

(Step (a))

The step (a) is a step of forming the barrier layer 12 containing the tetra- or higher urethane acrylate and having a thickness of 50 to 200 nm, on one surface of the base material 11 having light-transmitting properties.
The barrier layer 12 is formed by applying a coating solution for the barrier layer onto one side of the base material 11 and curing the coating solution.
For the application of the coating solution for the barrier layer, a dipping method that facilitates thin film formation can be suitably used.
Curing of the coating solution for the barrier layer is performed by irradiation with ultraviolet rays. The cumulative light amount of the ultraviolet rays is preferably 150 to 500 mJ/cm$^2$.
The coating liquid for the barrier layer contains a tetra- or higher functional urethane acrylate, and may contain a photopolymerization initiator and a solvent as necessary.
Examples of the photopolymerization initiator include 1-hydroxy-cyclohexyl-phenyl-ketone, 2,2-dimethoxy-2-phenylacetophenone, acetophenone, benzophenone, xanthone, 3-methylacetophenone, 4-chlorobenzophenone, 4,4'-dimethoxybenzophenone, N,N,N',N'-tetramethyl-4,4'-diaminobenzophenone, benzoin propylether, benzyldimethylketal, and 1-(4-isopropylphenyl)-2-hydroxy-2-methylpropane-1-one.
Examples of the solvent include: alcohols such as methanol and isopropanol; ketones such as methyl ethyl ketone and methyl isobutyl ketone; esters such as isobutyl acetate; and aromatic hydrocarbons such as toluene.
These photopolymerization initiators and solvents may be used singly, or may be used in combination of two or more thereof.

(Step (b))

The step (b) is a step of forming the semi-cured product layer 13s on the base material 11 by applying the ultraviolet-curable resin composition onto the barrier layer 12 formed on one surface of the base material 11 having light-transmitting properties and semi-curing the ultraviolet-curable resin composition so as to cause the thickness after full curing to be 1.0 to 10.0 μm.
In the step (b), it is preferable that the ultraviolet-curable resin composition is semi-cured by irradiating the ultraviolet-curable resin composition on the base material 11 with ultraviolet rays with a cumulative light amount of 150 to 500 mJ/cm$^2$. The ultraviolet-curable resin composition is also referred to as a "coating solution for the buffer layer".
The ultraviolet-curable resin composition preferably contains the tri- or lower functional urethane acrylate, the silane coupling agent, and the metal chelate compound, and more preferably further contains the silica particles (particularly preferably solid silica sol) or the tetra- or higher functional urethane acrylate. In addition, the ultraviolet-curable resin composition may contain a photopolymerization initiator, an ultraviolet absorber, a solvent, and the like, as necessary.
Examples of the ultraviolet absorber include: benzotriazoles such as 2-(2-hydroxy-5-t-butylphenyl)-2H-benzotriazole, 3-(2H-benzotriazol-2-yl)-5-(1,1-dimethylethyl)-4-hydroxy, 2-(2H-benzotriazol-2-yl)-4,6-bis(1-methyl-1 -phenylethyl)phenol, and 2-(2H-benzotriazol-2-yl)-6-(1-methyl-1-phenylethyl)-4-(1,1,3,3-tetramethylbutyl)phenol; benzophenones such as 2,4-dihydroxybenzophenone, 2-hydroxy-4-methoxybenzophenone, 2-hydroxy-4-methoxy-5 -sulfobenzophenone, and 2-hydroxy-4-(octyloxy)benzophenone; triazines such as 2-[4,6-di(2,4-xylyl)-1,3,5-triazin-2-yl]-5-octyloxyphenol, 2,4-bis[2-hydroxy-4-butoxyphenyl]-6-(2,4-dibutoxyphenyl)-1,3-5-triazine; polymers obtained by copolymerizing the above ultraviolet absorbers with an acrylic monomer, such as 3-(2H-benzotriazol-2-yl)-4-hydroxyphenethyl=methacrylate, and 2-[2-hydroxy-5-[2-(methacryloyloxy)ethyl]phenyl]-2H-benzotriazole; inorganic materials such as zinc oxide, cerium oxide, and titanium oxide. These may be used singly, or may be used in combination of two or more thereof.
As the photopolymerization initiator and the solvent, the photopolymerization initiators and solvents exemplified above in the description of the coating solution for the barrier layer can be adopted.
For example, the ultraviolet-curable resin composition may contain an aqueous solution of an acid such as hydrochloric acid, sulfuric acid, nitric acid, or acetic acid in order to promote hydrolysis of the silane coupling agent and the like.
The Young's modulus of the semi-cured product layer 13s formed in the step (b) is 0.1 to 2.5 GPa. The percent elongation of the semi-cured product layer 13s is preferably 105% to 200%.

(Step (c))

Step (c) is a step of obtaining the intermediate laminate 1 by forming the anti-reflective layer 14 on the semi-cured product layer 13s. The step (c) includes a step (c-3) as follows.

Step (c-3): a step of forming the low refractive index layer 14a having a refractive index of 1.47 or less and a thickness of 50 to 200 nm on the semi-cured product layer 13s.

The low refractive index layer 14a is preferably formed by applying a coating solution for the low refractive index layer onto the semi-cured product layer 13s and curing the coating solution.

Curing of the coating solution for the low refractive index layer is performed by a heating treatment. The heating temperature is preferably 70 to 110°C.

The coating solution for the low refractive index layer preferably contains the silica particles (particularly preferably hollow silica sol), the silane coupling agent, and the metal chelate compound, and may also contain a solvent as necessary.

As the solvent, the solvents exemplified above in the description of the coating solution for the barrier layer can be adopted.

For example, the coating solution for the low refractive index layer may contain an aqueous solution of an acid such as hydrochloric acid, sulfuric acid, nitric acid, or acetic acid in order to promote hydrolysis of the silane coupling agent and the like.

The percent elongation of the intermediate laminate 1 obtained in the step (c) is 105% to 150%.

(Step (d))

The step (d) is a step of, using a transfer mold 30 having an irregular uneven structure on a transfer surface 30a, and having an arithmetic mean roughness Ra of the transfer surface 30a of 0.01 to 1.25 $\mu$m and a mean unevenness period RSm of 1 to 30 $\mu$m, transferring the uneven structure of the transfer surface 30a onto the surface of the anti-reflective layer 14 of the intermediate laminate 1.

The arithmetic mean height Sa of the transfer surface of the transfer mold 30 is preferably 0.01 to 1.6 $\mu$m.

At the time of transfer, it is preferable that the surface of the anti-reflective layer 14 of the intermediate laminate 1 is subjected to a pressurizing treatment at a pressure of 4 to 38 MPa and a temperature of 60°C to 150°C. When the pressure and temperature during transfer are within the above ranges, the uneven structure on the transfer surface of the transfer mold can be sufficiently transferred (that is, the transfer ratio is high).

As a result, it is easy to obtain the transparent substrate 10 having an uneven structure in which the arithmetic mean roughness Ra of the surface is 0.01 to 1.00 $\mu$m and the mean unevenness period RSm is 1 to 30 $\mu$m. In particular, the temperature during transfer is preferably 90°C to 150°C in a case where the material of the base material 11 is a polycarbonate resin, and is preferably 90°C to 120°C in a case of polymethyl methacrylate. The pressure at the time of transfer is preferably from 10 to 35 MPa.

The transfer mold 30 can be manufactured, for example, as follows.

A positive photoresist containing silver particles is applied onto a glass substrate, then baked, cooled to room temperature, and irradiated with ultraviolet rays. Next, the photoresist is developed using an inorganic alkaline solution, is made conductive by nickel, and is further electroformed, whereby a mold base mold is obtained. The mold base mold is peeled off from the glass substrate, the silver particles adhered to the surface are removed, and the shape is reversed by electroforming, whereby the transfer mold 30 is obtained.

The arithmetic mean roughness Ra and the mean unevenness period RSm of the transfer surface 30a can be adjusted by the particle size and amount of the silver particles contained in the positive photoresist.

In addition to the above-described method, the transfer mold 30 can also be manufactured by, for example, a blasting method, an electrical discharge machining method, or an etching method.

In the step (d), the uneven structure of the transfer surface 30a of the transfer mold 30 is transferred to the surface of the anti-reflective layer 14. As illustrated in FIG. 2, as the pressure during transfer increases, it becomes easy for the surfaces of the semi-cured product layer 13s, the barrier layer 12, and the base material 11 in addition to the anti-reflective layer 14 to have the uneven structure.

(Step (e))

The step (e) is a step of fully curing the semi-cured product layer 13s after the step (d).

Full curing of the semi-cured product layer 13s is performed by irradiation with ultraviolet rays. The cumulative light amount of the ultraviolet rays is preferably 800 to 1200 mJ/cm$^2$.

In the step (e), the semi-cured product layer 13s becomes the buffer layer 13, and the transparent substrate 10 is obtained.

<Operational Effects>

The transparent substrate of the present invention described above includes the anti-reflective layer having the low refractive index layer as the outermost layer, and thus has anti-reflective properties. Moreover, the transparent substrate of the present invention has the irregular uneven structure on the surface of the anti-reflective layer, the arithmetic mean roughness Ra of the surface of the uneven structure is 0.01 to 1.00 μm, and the mean unevenness period RSm thereof is 1 to 30 μm, so that the transparent substrate also has anti-glare properties.

In the transparent substrate of the present invention, the gloss value which is an index of the anti-glare properties is less likely to increase. Specifically, the gloss value tends to be 5.0 to 38.5 GU, and the haze value which is an index of the anti-reflective properties tends to be 0.5% to 10.0%. The gloss value of the transparent substrate is preferably 5.0 to 35.0 GU, and the haze value of the transparent substrate is preferably 0.8% to 8.0%.

Furthermore, according to the method for manufacturing the transparent substrate of the present invention, unevenness is shaped by transferring the uneven structure to the surface of the anti-reflective layer of the intermediate laminate having a percent elongation of 105% to 120% using the transfer mold.

Since the semi-cured product layer is provided between the base material and the anti-reflective layer in the intermediate laminate to be adjacent to the anti-reflective layer, an external force applied to the anti-reflective layer during the transfer process is effectively absorbed by the semi-cured product layer. Therefore, the uneven structure can be formed on the surface of the anti-reflective layer while preventing the anti-reflective layer from being damaged, so that the transparent substrate having anti-glare properties while properly maintaining the original function (anti-reflective properties) of the anti-reflective layer is obtained.

Furthermore, in the method for manufacturing the transparent substrate of the present invention, the arithmetic mean roughness Ra, the arithmetic mean height Sa, and the mean unevenness period RSm of the surface of the uneven structure to be shaped by transfer can be adjusted by changing the conductions during transfer such as temperature and pressure in the step (d). Therefore, a plurality of transparent substrates having different uneven structures can be manufactured from the same transfer mold.

<Applications>

The transparent substrate of the present invention is suitable as an anti-reflective base material provided in the entire panel of the display surface of an image display device such as a liquid crystal display device (LCD), a plasma display (PDP), an electroluminescence display (ELD), or a cathode-ray tube display device (CRT), a vehicle control panel, a navigation panel, and the like.

"Other Embodiments"

The transparent substrate of the present invention is not limited to the above-described substrates.

The anti-reflective layer 14 of the transparent substrate 10 illustrated in FIGS. 1 and 2 has a single layer structure composed of the low refractive index layer 14a. However, for example, as illustrated in FIG. 3, the anti-reflective layer 14 may have a multi-layer structure (three-layer structure) including, in order from the base material 11 side, a medium refractive index layer 14c having a refractive index of more than 1.47 and less than 1.65 and a thickness of 50 to 120 nm, a high refractive index layer 14b having a refractive index of 1.60 or more and higher than the refractive index of the medium refractive index layer and a thickness of 50 to 120 nm, and the low refractive index layer 14a. When the anti-reflective layer 14 also has the medium refractive index layer 14c and the high refractive index layer 14b in addition to the low refractive index layer 14a, the anti-reflective properties are further enhanced.

The medium refractive index layer 14c and the high refractive index layer 14b preferably contain a colloidal metal oxide (metal oxide sol) in order to secure predetermined refractive indexes, and may contain a silane coupling agent or a hydrolysate thereof or a metal alkoxide forming a metal oxide as a binder component for binding and fixing metal oxide fine particles, and contain a metal chelate compound used for forming the buffer layer 13 or the low refractive index layer 14a.

As the colloidal metal oxide (metal oxide sol), a titanium oxide sol, an alumina sol, a zirconium oxide sol, an antimony oxide sol, and the like can be adopted. Among these, in consideration of adjustment of the refractive index, dispersibility in an organic solvent, stability of the coating solution, and adhesion to the base material 11, a rutile type titanium oxide (titania) sol and a zirconium oxide sol are preferable.

As the silane coupling agent or the hydrolysate thereof, a compound represented by General Formula (1) or a hydrolysate thereof can be adopted. In particular, from the viewpoint of excellent adhesion to other layers and solvent resistance, a compound represented by General Formula (3) or a hydrolysate thereof is preferable.

$$\text{Ep-CH}_2\text{-CH}_2\text{-O-R}^3\text{-Si(OR}^4)_3 \ldots \qquad (3)$$

In Formula (3), Ep is an epoxy group, $R^3$ is an alkylene group, and $R^4$ is an alkyl group or an alkoxyalkyl group.

Examples of the compound represented by Formula (3) include γ-glycidoxypropyltrimethoxysilane.

As the metal alkoxide, a compound represented by General Formula (4) can be adopted.

$$M^2(OR^5)_s \ldots \qquad (4)$$

In Formula (4), $M^2$ is a trivalent or tetravalent metal, $R^5$ is a hydrocarbon group having 1 to 5 carbon atoms, and s is the valence (3 or 4) of $M^2$.

As the compound represented by Formula (4), for example, alkoxides of titanium, aluminum, zirconium, and tin are suitable. Specific examples thereof include titanium methoxide, titanium ethoxide, titanium n-propoxide, titanium isopropoxide, titanium n-butoxide, titanium isobutoxide, aluminum ethoxide, aluminum isopropoxide, aluminum pentoxide, aluminum t-pentoxide, tin t-pentoxide, zirconium ethoxide, zirconium n-propoxide, zirconium isopropoxide, and zirconium n-butoxide.

These may be used singly, or may be used in combination of two or more thereof.

The medium refractive index layer 14c and the high refractive index layer 14b (particularly the high refractive index layer 14b) may contain a metal halide for the purpose of increasing the refractive index.

As the metal halide, for example, metal chlorides and metal bromides are used. Specifically, antimony trichloride, zirconium tetrachloride, bismuth trichloride, titanium tetrabromide, germanium tetrachloride, antimony tribromide, tantalum pentachloride, and the like can be adopted. However, in consideration of an increase in the refractive index, dispersibility in an organic solvent, and stability of a coating solution, antimony trichloride, bismuth trichloride, and antimony tribromide are preferable.

Furthermore, the medium refractive index layer 14c and the high refractive index layer 14b may contain a thermosetting resin as a binder as appropriate.

Examples of the thermosetting resin include a phenol-formaldehyde resin, a furan-formaldehyde resin, a xylene-formaldehyde resin, a ketone-formaldehyde resin, a urea formaldehyde resin, a melamine-formaldehyde resin, an alkyd resin, an unsaturated polyester resin, an epoxy resin, a bismaleimide resin, a triallyl cyanurate resin, a thermosetting acrylic resin, a silicone resin, and a urethane resin.

These may be used singly, or may be used in combination of two or more thereof.

The thicknesses of each of the medium refractive index layer 14c and the high refractive index layer 14b is preferably 50 to 120 nm.

For example, a transparent substrate 20 illustrated in FIG. 3 can be manufactured by performing the following steps (c-1) and (c-2) before the step (c-3) in the step (c) of the method for manufacturing the transparent substrate 10 described above. That is, the method for manufacturing the transparent substrate 20 has the steps (a), (b), (c), (d), and (e), the step (c) includes the step (c-1) the step (c-2), and the step (c-3).

Step (c-1): a step of forming a medium refractive index layer having a refractive index of more than 1.47 and less than 1.65 and a thickness of 50 to 120 nm on the semi-cured product layer.

Step (c-2): a step of forming a high refractive index layer having a refractive index of 1.60 or more and higher than the refractive index of the medium refractive index layer and having a thickness of 50 to 120 nm on the medium refractive index layer.

The medium refractive index layer 14c is formed by applying a coating liquid for the medium refractive index layer on the semi-cured product layer 13s and curing the coating solution.

The high refractive index layer 14b is formed by applying a coating liquid for the high refractive index layer on the medium refractive index layer 14c and curing the coating solution.

The low refractive index layer 14a is formed by applying a coating liquid for the low refractive index layer on the high refractive index layer 14b and curing the coating solution.

Curing of the coating solution for the medium refractive index layer, the coating solution for the high refractive index layer, and the coating solution for the low refractive index layer is performed by a heating treatment. The heating temperature is preferably 70°C to 110°C.

The coating liquid for the medium refractive index layer and the coating liquid for the high refractive index layer preferably each contain a colloidal metal oxide (metal oxide sol), a silane coupling agent or a hydrolysate thereof, a metal alkoxide, and a metal chelate compound, and may contain a metal halide, a thermosetting resin, a solvent, and the like as necessary.

As the solvent, the solvents exemplified above in the description of the coating solution for the barrier layer can be adopted.

For example, the coating solution for the medium refractive index layer and the coating solution for the high refractive index layer may contain an aqueous solution of an acid such as hydrochloric acid, sulfuric acid, nitric acid, and acetic acid in order to promote hydrolysis of the silane coupling agent and the like.

The anti-reflective layer 14 may have a two-layer structure including the high refractive index layer 14b and the low refractive index layer 14a in order from the base material 11 side, or a two-layer structure including the medium refractive index layer 14c and the low refractive index layer 14a.

In the transparent substrate 10 illustrated in FIGS. 1 and 2 and the transparent substrate 20 illustrated in FIG. 3, the barrier layer 12 is provided between the base material 11 and the buffer layer 13, but the barrier layer 12 may not be provided.

Furthermore, the uneven structure is formed on the surface of each layer of the transparent substrates 10 and 20. However, as long as the uneven structure is formed on the surface of at least the low refractive index layer 14a, the uneven structure may not be formed on the surfaces of the remaining layers.

In addition, in the transparent substrates 10 and 20, the anti-reflective layer 14 is formed on one surface of the base material 11. However, the anti-reflective layer 14 may also be formed on the other surface of the base material 11 via the buffer layer 13.

[Examples]

Hereinafter, the present invention will be described in more detail by examples.

Various measurement and evaluation methods, a method for manufacturing a transfer mold, and a method for preparing each coating solution are as follows.

"Evaluation and Measurement"

<Measurement of Young's Modulus>

An ultraviolet-curable resin composition was applied onto a glass substrate and irradiated with ultraviolet rays with a cumulative light amount of 500 mJ/cm$^2$ to semi-cure the ultraviolet-curable resin composition. The obtained semi-cured product was peeled off from the glass substrate to be used as a test piece.

A bending test was conducted on the obtained test piece according to Japanese Industrial Standards JIS K 7171 under conditions of a temperature of 23°C and a speed of 1 mm/min, and a stress-strain curve was drawn. The slope of the linear portion of the stress-strain curve was obtained and used as the Young's modulus.

<Measurement of Refractive Index>

A coating solution for a low refractive index layer was applied onto a glass substrate to a thickness of 100 nm and was cured to form a low refractive index layer. Using the spectrophotometer ("V-550" manufactured by JASCO Corporation), the reflectance of the low refractive index layer was measured and the refractive index was calculated.

A medium refractive index layer and a high refractive index layer were measured in the same manner.

<Measurement of Percent Elongation>

An ultraviolet-curable resin composition was applied onto the surface of a polymethyl methacrylate layer side of a laminated sheet, in which a polycarbonate layer (thickness 440 $\mu$m) and a polymethyl methacrylate layer (60 $\mu$m) are laminated, as a base material, and was irradiated with ultraviolet rays with a cumulative light amount of 200 mJ/cm$^2$ to semi-cure the ultraviolet-curable resin composition, and the semi-cured ultraviolet-curable resin composition was used as a test piece.

The obtained test piece or an intermediate laminate was heated to a temperature close to Tg of the base material, and then interposed between L-shaped bending male and female dies with the base material surface being on the recessed portion side, and the male and female dies were pressed against each other and cooled. After the cooling, the bent protruding surface was observed with a microscope, and the presence or absence of cracks was checked. The same operation was performed by changing the bend radius (bend R), and the percent elongation until the bend R at which no crack is generated was calculated.

<Measurement of Arithmetic Mean Roughness Ra, Arithmetic Mean Height Sa and Mean Unevenness Period RSm>

Using a shape analysis laser microscope ("VK-X 150" manufactured by KEYENCE CORPORATION), roughness curves were created according to ISO 25178 at an objective lens magnification of 50 times and a cutoff $\lambda$c of 0.08, and the arithmetic mean roughness Ra and the mean unevenness period RSm were measured from the roughnesses of a plurality of 20 lines. In addition, the arithmetic mean height Sa in an arbitrary range was measured.

<Measurement of Transfer Ratio>

The transfer ratio was obtained from Formula (i).

$$\text{Transfer ratio (\%)} = (\text{arithmetic mean roughness Ra of transparent substrate} / \text{arithmetic mean roughness Ra of transfer mold}) \times 100 \qquad \ldots(i)$$

<Evaluation of Anti-Glare Properties>

Using a glossmeter ("GM-268Plus" manufactured by Konica Minolta, Inc.), the gloss value was measured according to Japanese Industrial Standard JIS Z 8741 under conditions of 60° incidence and reflection angles. The smaller the gloss value, the better the anti-glare properties.

<Measurement of Anti-Reflective Properties>

Using the spectrophotometer ("V-550" manufactured by JASCO Corporation), the total light transmittance and the diffuse transmittance in a wavelength range of 550 nm were measured under conditions of a scanning speed of 1000 nm/min, and the haze value was obtained from Formula (ii). The larger the haze value, the better the anti-reflective properties.

$$\text{Haze value (\%)} = (\text{diffuse transmittance} / \text{total light transmittance}) \times 100 \ldots(ii)$$

"Manufacturing of Transfer Mold"

<Manufacturing of Transfer Mold T1>

Silver particles having an average particle size of 1 $\mu$m were added to a positive photoresist so as to have a concentration of 5 mass%, mixed and agitated, and degassed while being pressurized. Next, the positive photoresist containing the silver particles was applied onto a clean, high flatness glass substrate to a film thickness of 3 $\mu$m, and then baked in a clean oven at 80°C for 60 minutes. After the baking, the resultant was cooled to room temperature and irradiated with ultraviolet rays with a cumulative light amount of 55 mJ/cm$^2$ by a high-pressure mercury lamp. Next, the resultant was developed using an inorganic alkaline solution, was made conductive by nickel, and was further electroformed to reach a thickness of 0.5 mm, whereby a mold base mold was obtained. The mold base mold is peeled off from the glass substrate, the silver particles adhered to the surface were dissolved in a mixed solution of ammonia and hydrogen peroxide solution so as to be removed, and the shape was then reversed by electroforming, whereby a transfer mold T1 was obtained.
The arithmetic mean roughness Ra of the obtained transfer mold T1 was 0.15 $\mu$m, the arithmetic mean height Sa was 0.18 $\mu$m, and the mean unevenness period RSm was 5.5 $\mu$m.

<Manufacturing of Transfer Mold T2>

A transfer mold T2 was obtained in the same manner as the transfer mold T1 except that silver particles having an average particle size of 8 $\mu$m were used.
The silica particles Ra of the obtained transfer mold B was 1.20 $\mu$m, the arithmetic mean height Sa was 1.40 $\mu$m, and the mean unevenness period RSm was 44.5 $\mu$m.

"Preparation of Coating Solution"

<Components Contained in Coating Solution>

As the components contained in the coating solution, the following compounds were used.

- AfOI2FA: aliphatic organic isocyanate-based difunctional acrylate.
- AfOI4FA: aliphatic organic isocyanate-based tetrafunctional acrylate.
- AfOI6FA: aliphatic organic isocyanate-based hexafunctional acrylate.
- AcOI3FA: alicyclic organic isocyanate-based trifunctional acrylate.
- GPTMS: $\gamma$-glycidoxypropyltrimethoxysilane.
- APTMS: 3-acryloxypropyltrimethoxysilane.
- 7nmSSS: solid silica sol having an average particle size of 7 nm (dispersion liquid in which solid silica particles having an average particle size of 7 nm are dispersed in isopropanol (IPA) to have a concentration of 20 mass%).

- 300nmSSS: solid silica sol having an average particle size of 300 nm (dispersion liquid in which solid silica particles having an average particle size of 300 nm are dispersed in IPA to have a concentration of 20 mass%).
- 60nmHSS: hollow silica sol having an average particle size of 60 nm (dispersion liquid in which hollow silica particles having an average particle size of 60 nm are dispersed in IPA to have a concentration of 20 mass%).
- AAAADI: alkyl acetoacetate aluminum diisopropylate.
- ATAA: aluminum trisacetylacetonate.
- ZDBB (EAA): zirconium dibutoxybis (ethylacetoacetate).
- Photopolymerization initiator: 1-hydroxy-cyclohexyl-phenyl-ketone.
- Ultraviolet absorber: 2-(2-hydroxy-5-t-butylphenyl)-2H-benzotriazole.
- Organic solvent: mixed solvent of sec-butyl acetate (SBAC) and IPA (SBAC : IPA= 6 : 4 (mass ratio)).

<Preparation of Coating Solution B1 for Barrier Layer>

100 parts by mass of an aliphatic organic isocyanate-based hexafunctional acrylate as a tetra- or higher functional urethane acrylate, 3 parts by mass of a photopolymerization initiator, and 6000 parts by mass of an organic solvent were mixed to obtain a coating solution B1 for a barrier layer. The formulation composition is shown in Table 1.

[Table 1]

| Coating solution for barrier layer [parts by mass] | | B1 |
|---|---|---|
| Tetra- or higher functional urethane acrylate | Af0I6FA | 100 |
| Photopolymerization initiator | | 3 |
| Organic solvent | | 6000 |

<Preparation of Ultraviolet-Curable Resin Composition (Coating Solution for Buffer Layer) U1>

5 parts by mass of an alicyclic organic isocyanate-based trifunctional functional acrylate as a tri- or lower functional urethane acrylate, 95 parts by mass of an aliphatic organic isocyanate-based hexafunctional acrylate as a tetra- or higher functional urethane acrylate, 10 parts by mass of $\gamma$- glycidoxypropyltrimethoxysilane as a silane coupling agent, 20 parts by mass of a solid silica sol having an average particle size of 7 nm as silica particles, 0.5 parts by mass of aluminum trisacetylacetonate as a metal chelate compound, 10 parts by mass of an ultraviolet absorber, 6 parts by mass of a photopolymerization initiator, 2 parts by mass of acetic acid aqueous solution (concentration 0.01 mass%), and 500 parts by mass of an organic solvent were mixed to obtain an ultraviolet-curable resin composition U1. The formulation composition is shown in Table 2.

<Preparation of Ultraviolet-Curable Resin Compositions (Coating Solutions for Buffer Layer) U2 to U7>

Ultraviolet-curable resin composition U2 to U7 were obtained in the same manner as the ultraviolet-curable resin composition U1 except that the formulation composition was changed as shown in Tables 2 and 3.

[Table 2]

| Ultraviolet-curable resin composition [parts by mass] | | U1 | U2 | U3 | U4 |
|---|---|---|---|---|---|
| Tri- or lower functional urethane acrylate | Af0I2FA | 0 | 0 | 0 | 0 |
| | Af0I3FA | 5 | 12 | 100 | 90 |
| Tetra- or higher functional urethane acrylate | Af0I4FA | 0 | 0 | 0 | 0 |
| | Af0I6FA | 95 | 88 | 0 | 10 |
| Silane coupling agent | GPTMS | 10 | 10 | 12 | 12 |
| | APTMS | 0 | 0 | 0 | 0 |
| Silica particles (sol) | 7nmSSS | 20 | 20 | 40 | 40 |
| Metal chelate compound | AAAADI | 0 | 0 | 0 | 0 |
| | ATAA | 0.5 | 0.5 | 1.0 | 1.0 |

(continued)

| Ultraviolet-curable resin composition [parts by mass] | U1 | U2 | U3 | U4 |
|---|---|---|---|---|
| Ultraviolet absorber | 10 | 10 | 10 | 10 |
| Photopolymerization initiator | 6 | 6 | 6 | 6 |
| Aqueous solution of acetic acid | 2 | 2 | 2 | 2 |
| Organic solvent | 500 | 500 | 500 | 500 |

[Table 3]

| Ultraviolet-curable resin composition | | U5 | U6 | U7 |
|---|---|---|---|---|
| Tri- or lower functional urethane acrylate | Af0I2FA | 0 | 12 | 0 |
| | Af0I3FA | 5 | 0 | 3 |
| Tetra- or higher functional urethane acrylate | Af0I4FA | 0 | 88 | 0 |
| | Af0I6FA | 95 | 0 | 97 |
| Silane coupling agent | GPTMS | 10 | 0 | 12 |
| | APTMS | 0 | 10 | 0 |
| Silica particles (sol) | 7nmSSS | 0 | 20 | 20 |
| Metal chelate compound | AAAADI | 0 | 0.5 | 0 |
| | ATAA | 0.5 | 0 | 0.5 |
| Ultraviolet absorber | | 10 | 10 | 10 |
| Photopolymerization initiator | | 6 | 6 | 6 |
| Aqueous solution of acetic acid | | 2 | 2 | 2 |
| Organic solvent | | 500 | 500 | 500 |

<Preparation of Coating Solution L1 for Low Refractive Index Layer>

10 parts by mass of a hollow silica sol having an average particle size of 60 nm as silica particles, 89 parts by mass of γ-glycidoxypropyltrimethoxysilane as a silane coupling agent, 1 part by mass of aluminum trisacetylacetonate as a metal chelate compound, 20 parts by mass of acetic acid aqueous solution (concentration 0.01 mass%), and 3000 parts by mass of an organic solvent were mixed to obtain a coating solution L1 for a low refractive index layer. The formulation composition is shown in Table 4.

<Preparation of Coating Solutions L2 to L4 for Low Refractive Index Layer>

Coating solutions L2 to L4 for a low refractive index layer were obtained in the same manner as the coating solution L1 for a low refractive index layer except that the formulation composition was changed as shown in Table 4.

[Table 4]

| Coating solution for low refractive index layer [parts by mass] | | L1 | L2 | L3 | L4 |
|---|---|---|---|---|---|
| Silica particles (sol) | 60nmHSS | 10 | 5 | 50 | 10 |
| Silane coupling agent | GPTMS | 89 | 94 | 15 | 0 |
| | APTMS | 0 | 0 | 0 | 89 |
| Metal chelate compound | AAAADI | 0 | 0 | 0 | 1 |
| | ATAA | 1 | 1 | 35 | 0 |
| Aqueous solution of acetic acid | | 20 | 20 | 20 | 20 |

(continued)

| Coating solution for low refractive index layer [parts by mass] | L1 | L2 | L3 | L4 |
|---|---|---|---|---|
| Organic solvent | 3000 | 3000 | 3000 | 3000 |

<Preparation of Coating Solution HI for High Refractive Index Layer>

59 parts by mass of a zirconium oxide sol as a colloidal metal oxide, 1 part by mass of a solid silica sol having an average particle size of 300 nm as silica particles, 20 parts by mass of $\gamma$-glycidoxypropyltrimethoxysilane as a silane coupling agent, 20 parts by mass of zirconium dibutoxybis (ethylacetoacetate) as a metal chelate compound, 5 parts by mass of acetic acid aqueous solution (concentration of 0.01 mass%), and 2500 parts by mass of an organic solvent were mixed to obtain a coating solution L1 for a high refractive index layer. The formulation composition is shown in Table 5.

[Table 5]

| Coating solution for high refractive index layer [parts by mass] | | H1 |
|---|---|---|
| Colloidal metal oxide | Zirconium oxide sol | 59 |
| Silica particles (sol) | 300nmSSS | 1 |
| Silane coupling agent | GPTMS | 20 |
| Metal chelate compound | ZDBB(EAA) | 20 |
| Aqueous solution of acetic acid | | 5 |
| Organic solvent | | 2500 |

<Preparation of Coating Solution M1 for Medium Refractive Index Layer>

36 parts by mass of a zirconium oxide sol as a colloidal metal oxide, 15 parts by mass of $\gamma$-glycidoxypropyltrimethoxysilane as a silane coupling agent, and 48 parts by mass of a silane-modified epoxy resin, 1 part by mass of aluminum trisacetylacetonate as a metal chelate compound, 5 parts by mass of acetic acid aqueous solution (concentration of 0.01 mass%), and 2500 parts by mass of an organic solvent were mixed to obtain a coating solution M1 for a medium refractive index layer. The formulation composition is shown in Table 6.

[Table 6]

| Coating solution for medium refractive index layer [parts by mass] | | M1 |
|---|---|---|
| Colloidal metal oxide | Zirconium oxide sol | 36 |
| Silane coupling agent | GPTMS | 15 |
| | Silane-modified epoxy resin | 48 |
| Metal chelate compound | ATAA | 1 |
| Aqueous solution of acetic acid | | 5 |
| Organic solvent | | 2500 |

"Example 1"

As a base material, a laminated sheet in which a polycarbonate layer (thickness 440 $\mu$m) and a polymethyl methacrylate layer (60 $\mu$m) were laminated was used. The total light transmittance of this laminated sheet was 91%.

The ultraviolet-curable resin composition U1 was applied to the surface of the laminated sheet on the polymethyl methacrylate layer side so as to cause the thickness after full curing to be 2.0 $\mu$m, and irradiated with ultraviolet rays with a cumulative light amount of 200 mJ/cm$^2$ to semi-cure the ultraviolet-curable resin composition U1, whereby a semi-cured product layer was formed on the base material.

Next, the coating solution L1 for a low refractive index layer was applied onto the semi-cured product layer so as to cause the thickness after curing to be 100 nm and was subjected to a heating treatment at 100°C, whereby an intermediate laminate in which an anti-reflective layer including a low refractive index layer was formed on the semi-cured product layer was obtained.

The Young's modulus and percent elongation of the semi-cured product layer, the refractive index of the low refractive index layer, and the percent elongation of the intermediate laminate are shown in Table 7.

By pressing the transfer surface of the transfer mold T1 against the surface of the anti-reflective layer of the obtained intermediate laminate, the uneven structure of the transfer surface was transferred to the surface of the anti-reflective layer under conditions of a temperature of 90°C and a pressure of 30 MPa, whereby unevenness was shaped.

Next, the semi-cured product layer was fully cured by being irradiated with ultraviolet rays with a cumulative light amount of 1000 mJ/cm$^2$, whereby a transparent substrate was obtained.

The arithmetic mean roughness Ra, the arithmetic mean height Sa, and the mean unevenness period RSm of the surface of the anti-reflective layer of the obtained transparent substrate were measured, the transfer ratio was obtained, and the anti-glare properties and anti-reflective properties were evaluated. The results are shown in Table 7.

"Examples 3 to 5 and 9 to 12 and Comparative Examples 1 to 5"

Transparent substrates were manufactured in the same manner as in Example 1 except that the kind of the ultraviolet-curable resin composition, the thickness of the semi-cured product layer after being fully cured, the cumulative light amount of the ultraviolet rays during semi-curing, and the kind of the transfer mold and transfer conditions (temperature and pressure) were changed as shown in Tables 7 to 10, and various measurements and evaluations were performed. The results are shown in Tables 7 to 10.

"Examples 2 and 6"

The coating solution B1 for a barrier layer was applied to the surface of the laminated sheet on the polymethyl methacrylate layer side so as to cause the thickness after curing to be 100 nm, and irradiated with ultraviolet rays with a cumulative light amount of 200 mJ/cm$^2$ to fully cure the coating solution B1 for a barrier layer, whereby a barrier layer was formed on the base material.

Next, an intermediate laminate was obtained in the same manner as in Example 1 except that an ultraviolet-curable resin composition of a kind shown in Tables 7 and 8 was applied onto the barrier layer so as to cause the thickness after full curing to have a value shown in Tables 7 and 8, was irradiated with ultraviolet rays with a cumulative light amount of 200 mJ/cm$^2$ to semi-cure the ultraviolet-curable resin composition and form a semi-cured product layer on the barrier.

A transparent substrate was manufactured using the obtained intermediate laminate in the same manner as in Example 1 except that the kind of the transfer mold and transfer conditions (temperature and pressure) were changed as shown in Tables 7 and 8, and various measurements and evaluations were performed. The results are shown in Tables 7 and 8.

"Example 7"

The ultraviolet-curable resin composition U2 was applied to the surface of the laminated sheet on the polymethyl methacrylate film side so as to cause the thickness after full curing to be 1.5 μm, and irradiated with ultraviolet rays with a cumulative light amount of 200 mJ/cm$^2$ to semi-cure the ultraviolet-curable resin composition U2, whereby a semi-cured product layer was formed on the base material.

Next, the coating solution M1 for a medium refractive index layer was applied onto the semi-cured product layer so as to cause the thickness after curing to be 85 nm and was subjected to a heating treatment at 100°C, whereby a medium refractive index layer was formed on the semi-cured product layer.

Next, the coating solution L1 for a low refractive index layer was applied onto the medium refractive index layer so as to cause the thickness after curing to be 100 nm and was subjected to a heating treatment at 100°C, whereby an intermediate laminate in which an anti-reflective layer including the medium refractive index layer and a low refractive index layer was formed on the semi-cured product layer was obtained.

A transparent substrate was manufactured using the obtained intermediate laminate in the same manner as in Example 1 except that the kind of the transfer mold and transfer conditions (temperature and pressure) were changed as shown in Table 8, and various measurements and evaluations were performed. The results are shown in Table 8.

"Example 8"

The ultraviolet-curable resin composition U2 was applied to the surface of the laminated sheet on the polymethyl methacrylate film side so as to cause the thickness after full curing to be 1.5 μm, and irradiated with ultraviolet rays with a cumulative light amount of 200 mJ/cm$^2$ to semi-cure the ultraviolet-curable resin composition U2, whereby a semi-cured product layer was formed on the base material.

Next, the coating solution M1 for a medium refractive index layer was applied onto the semi-cured product layer so as to cause the thickness after curing to be 85 nm and was subjected to a heating treatment at 100°C, whereby a medium refractive index layer was formed on the semi-cured product layer.

Next, the coating solution HI for a high refractive index layer was applied onto the medium refractive index layer so as to cause the thickness after curing to be 80 nm and was subjected to a heating treatment at 100°C, whereby a high refractive index layer was formed on the medium refractive index layer.

Next, the coating solution L1 for a low refractive index layer was applied onto the high refractive index layer so as to cause the thickness after curing to be 100 nm and was subjected to a heating treatment at 100°C, whereby an intermediate laminate in which an anti-reflective layer including the medium refractive index layer, the high refractive index layer, and a low refractive index layer was formed on the semi-cured product layer was obtained.

A transparent substrate was manufactured using the obtained intermediate laminate in the same manner as in Example 1 except that the kind of the transfer mold and transfer conditions (temperature and pressure) were changed as shown in Table 8, and various measurements and evaluations were performed. The results are shown in Table 8.

[Table 7]

| | | | Example 1 | Example 2 | Example 3 | Example 4 |
|---|---|---|---|---|---|---|
| Barrier layer | Coating solution for barrier layer | | - | B1 | - | - |
| | Thickness [nm] | | - | 100 | - | - |
| Semi-cured product layer | Ultraviolet-curable resin composition | | U1 | U2 | U3 | U4 |
| | Thickness [μm] | | 2.0 | 1.5 | 9.0 | 8.5 |
| | Young's modulus [GPa] | | 1.0 | 0.9 | 0.3 | 0.4 |
| | Percent elongation [%] | | 108 | 115 | 190 | 170 |
| | Cumulative light amount [mJ/cm2] | | 200 | 200 | 200 | 200 |
| Medium refractive index layer | Coating solution for medium refractive index layer | | - | - | - | - |
| | Thickness [nm] | | - | - | - | - |
| | Refractive index | | - | - | - | - |
| High refractive index layer | Coating solution for high refractive index layer | | - | - | - | - |
| | Thickness [nm] | | - | - | - | - |
| | Refractive index | | - | - | - | - |
| Low refractive index layer | Coating solution for low refractive index layer | | L1 | L1 | L2 | L1 |
| | Thickness [nm] | | 100 | 100 | 100 | 100 |
| | Refractive index | | 1.43 | 1.43 | 1.45 | 1.43 |
| Percent elongation of intermediate laminate [%] | | | 108 | 110 | 120 | 115 |
| Transfer conditions | Transfer mold | Kind | T1 | T1 | T1 | T2 |
| | | Ra [μm] | 0.15 | 0.15 | 0.15 | 1.20 |
| | | Sa [μm] | 0.18 | 0.18 | 0.18 | 1.40 |
| | | RSm [μm] | 5.5 | 5.5 | 5.5 | 44.5 |
| | Temperature [°C] | | 90 | 90 | 110 | 120 |
| | Pressure [MPa] | | 30 | 30 | 30 | 15 |

(continued)

| | | | Example 1 | Example 2 | Example 3 | Example 4 |
|---|---|---|---|---|---|---|
| Transparent substrate | Ra [μm] | | 0.03 | 0.03 | 0.06 | 0.90 |
| | Sa [μm] | | 0.05 | 0.05 | 0.11 | 1.10 |
| | RSm [μm] | | 7.813 | 8.029 | 8.231 | 7.922 |
| Transfer ratio [%] | | | 20 | 20 | 40 | 75 |
| Evaluation | Anti-glare properties | Gloss value [GU] | 38.5 | 38.5 | 37.9 | 34.2 |
| | Anti-reflective properties | Haze value [%] | 0.8 | 0.8 | 1.0 | 3.5 |

[Table 8]

| | | | Example 5 | Example 6 | Example 7 | Example 8 |
|---|---|---|---|---|---|---|
| Barrier layer | Coating solution for barrier layer | | - | B1 | - | - |
| | Thickness [nm] | | - | 100 | - | - |
| Semi-cured product layer | Ultraviolet-curable resin composition | | U5 | U4 | U2 | U2 |
| | Thickness [μm] | | 2.0 | 8.5 | 1.5 | 1.5 |
| | Young's modulus [GPa] | | 1.0 | 0.4 | 0.9 | 0.9 |
| | Percent elongation [%] | | 125 | 170 | 115 | 115 |
| | Cumulative light amount [mJ/cm2] | | 200 | 200 | 200 | 200 |
| Medium refractive index layer | Coating solution for medium refractive index layer | | - | - | M1 | M1 |
| | Thickness [nm] | | - | - | 85 | 85 |
| | Refractive index | | - | - | 1.60 | 1.60 |
| High refractive index layer | Coating solution for high refractive index layer | | - | - | - | H1 |
| | Thickness [nm] | | - | - | - | 80 |
| | Refractive index | | - | - | - | 1.70 |
| Low refractive index layer | Coating solution for low refractive index layer | | L1 | L1 | L1 | L1 |
| | Thickness [nm] | | 100 | 100 | 100 | 100 |
| | Refractive index | | 1.43 | 1.43 | 1.43 | 1.43 |
| Percent elongation of intermediate laminate [%] | | | 110 | 115 | 110 | 110 |
| Transfer conditions | Transfer mold | Kind | T1 | T2 | T1 | T1 |
| | | Ra [μm] | 0.15 | 1.20 | 0.15 | 0.15 |
| | | Sa [μm] | 0.18 | 1.40 | 0.18 | 0.18 |
| | | RSm [μm] | 5.5 | 44.5 | 5.5 | 5.5 |
| | Temperature [°C] | | 90 | 120 | 90 | 90 |
| | Pressure [MPa] | | 30 | 15 | 10 | 10 |

(continued)

|  |  |  | Example 5 | Example 6 | Example 7 | Example 8 |
|---|---|---|---|---|---|---|
| Transparent substrate | Ra [μm] | | 0.03 | 0.90 | 0.03 | 0.03 |
|  | Sa [μm] | | 0.05 | 1.10 | 0.05 | 0.05 |
|  | RSm [μm] | | 7.813 | 7.922 | 8.029 | 8.029 |
| Transfer ratio [%] | | | 20 | 75 | 20 | 20 |
| Evaluation | Anti-glare properties | Gloss value [GU] | 38.5 | 34.2 | 38.5 | 38.5 |
|  | Anti-reflective properties | Haze value [%] | 0.8 | 3.5 | 0.8 | 0.8 |

[Table 9]

|  |  |  | Example 9 | Example 10 | Example 11 | Example 12 |
|---|---|---|---|---|---|---|
| Barrier layer | Coating solution for barrier layer | | - | - | - | - |
|  | Thickness [nm] | | - | - | - | - |
| Semi-cured product layer | Ultraviolet-curable resin composition | | U2 | U2 | U2 | U6 |
|  | Thickness [μm] | | 1.5 | 1.5 | 1.5 | 1.5 |
|  | Young's modulus [GPa] | | 0.9 | 0.9 | 0.9 | 1.0 |
|  | Percent elongation [%] | | 115 | 115 | 105 | 107 |
|  | Cumulative light amount [mJ/cm2] | | 200 | 200 | 500 | 500 |
| Medium refractive index layer | Coating solution for medium refractive index layer | | - | - | - | - |
|  | Thickness [nm] | | - | - | - | - |
|  | Refractive index | | - | - | - | - |
| High refractive index layer | Coating solution for high refractive index layer | | - | - | - | - |
|  | Thickness [nm] | | - | - | - | - |
|  | Refractive index | | - | - | - | - |
| Low refractive index layer | Coating solution for low refractive index layer | | L3 | L1 | L1 | L4 |
|  | Thickness [nm] | | 100 | 100 | 100 | 100 |
|  | Refractive index | | 1.35 | 1.43 | 1.43 | 1.43 |
| Percent elongation of intermediate laminate [%] | | | 105 | 105 | 105 | 105 |
| Transfer conditions | Transfer mold | Kind | T1 | T1 | T1 | T1 |
|  |  | Ra [μm] | 0.15 | 0.15 | 0.15 | 0.15 |
|  |  | Sa [μm] | 0.18 | 0.18 | 0.18 | 0.18 |
|  |  | RSm [μm] | 5.5 | 5.5 | 5.5 | 5.5 |
|  | Temperature [°C] | | 90 | 90 | 90 | 90 |
|  | Pressure [MPa] | | 10 | 30 | 10 | 10 |

(continued)

| | | | Example 9 | Example 10 | Example 11 | Example 12 |
|---|---|---|---|---|---|---|
| Transparent substrate | Ra [μm] | | 0.03 | 0.03 | 0.03 | 0.03 |
| | Sa [μm] | | 0.05 | 0.05 | 0.05 | 0.05 |
| | RSm [μm] | | 8.029 | 8.029 | 8.029 | 8.029 |
| Transfer ratio [%] | | | 20 | 20 | 20 | 20 |
| Evaluation | Anti-glare properties | Gloss value [GU] | 38.5 | 38.5 | 38.5 | 38.5 |
| | Anti-reflective properties | Haze value [%] | 0.8 | 0.8 | 0.8 | 0.8 |

[Table 10]

| | | Comparative Example 1 | Comparative Example 2 | Comparative Example 3 | Comparative Example 4 | Comparative Example 5 |
|---|---|---|---|---|---|---|
| Barrier layer | Coating solution for barrier layer | - | - | - | - | - |
| | Thickness [nm] | - | - | - | - | - |
| Semi-cured product layer | Ultraviolet-curable resin composition | U7 | U3 | U2 | U4 | U2 |
| | Thickness [$\mu$m] | 1.5 | 9.0 | 0.7 | 12.0 | 1.5 |
| | Young's modulus [GPa] | 1.2 | 0.3 | 0.9 | 0.4 | 0.9 |
| | Percent elongation [%] | 106 | 190 | 105 | 110 | 103 |
| | Cumulative light amount [mJ/cm2] | 200 | 200 | 200 | 200 | 600 |
| Medium refractive index layer | Coating solution for medium refractive index layer | - | - | - | - | - |
| | Thickness [nm] | - | - | - | - | - |
| | Refractive index | - | - | - | - | - |
| High refractive index layer | Coating solution for high refractive index layer | - | - | - | - | - |
| | Thickness [nm] | - | - | - | - | - |
| | Refractive index | - | - | - | - | - |
| Low refractive index layer | Coating solution for low refractive index layer | L1 | L2 | L1 | L1 | L1 |
| | Thickness [nm] | 100 | 100 | 100 | 100 | 100 |
| | Refractive index | 1.43 | 1.45 | 1.43 | 1.43 | 1.43 |
| Percent elongation of intermediate laminate [%] | | 103 | 120 | 110 | 110 | 103 |

(continued)

| | | | Comparative Example 1 | Comparative Example 2 | Comparative Example 3 | Comparative Example 4 | Comparative Example 5 |
|---|---|---|---|---|---|---|---|
| Transfer conditions | Transfer mold | Kind | T1 | T1 | T1 | T1 | T1 |
| | | Ra [μm] | 0.15 | 0.15 | 0.15 | 0.15 | 0.15 |
| | | Sa [μm] | 0.18 | 0.18 | 0.18 | 0.18 | 0.18 |
| | | RSm [μm] | 5.5 | 5.5 | 5.5 | 5.5 | 5.5 |
| | Temperature [°C] | | 90 | 55 | 90 | 120 | 90 |
| | Pressure [MPa] | | 30 | 30 | 30 | 15 | 30 |
| Transparent substrate | Ra [μm] | | 0.02 | 0.003 | 0.02 | 0.003 | 0.02 |
| | Sa [μm] | | 0.04 | 0.007 | 0.04 | 0.007 | 0.04 |
| | RSm [μm] | | 7.792 | 7.752 | 7.792 | 7.752 | 7.792 |
| Transfer ratio [%] | | | 13 | 2 | 13 | 2 | 13 |
| Evaluation | Anti-glare properties | Gloss value [GU] | 39.1 | 40.7 | 39.1 | 40.7 | 39.1 |
| | Anti-reflective properties | Haze value [%] | 0.5 | 0.2 | 0.5 | 0.2 | 0.5 |

As is apparent from the results of Tables 7 to 9, the transparent substrate obtained in each example had anti-glare properties and anti-reflective properties.

On the other hand, as is apparent from the results in Table 10, the transparent substrate obtained in each comparative example did not have both anti-glare properties and anti-reflective properties.

Industrial Applicability

The transparent substrate of the present invention is suitable as an anti-reflective base material provided in the entire panel of the display surface of an image display device such as a liquid crystal display device (LCD), a plasma display (PDP), an electroluminescence display (ELD), or a cathode-ray tube display device (CRT), a vehicle control panel, a navigation panel, and the like. According to the present invention, it is possible to provide a transparent substrate having anti-glare properties and anti-reflective properties and a method for manufacturing the same.

Reference Signs List

1: intermediate laminate
10: transparent substrate
11: base material
12: barrier layer
13s: semi-cured product layer
13: buffer layer
14: anti-reflective layer
14a: low refractive index layer
14b: high refractive index layer
14c: medium refractive index layer
20: transparent substrate
30: present invention
30a: transfer surface

**Claims**

1. A transparent substrate (10) which is formed by fully curing a semi-cured product laye (13s) of an intermediate laminate (1) by irradiation with ultraviolet rays, the cumulative light amount of the ultraviolet rays being 800 to 1200 mJ/cm$^2$, the intermediate laminate comprising:

   a base material (11) having light-transmitting properties,
   an anti-reflective layer (14) provided on at least one surface of the base material, and
   the semi-cured product layer that is provided between the base material and the anti-reflective layer and is formed of a semi-cured product of an ultraviolet-curable resin composition, the resin composition being semi-cured by irradiating the ultraviolet-curable resin composition on the base material with ultraviolet rays by a cumulative light amount of 150 to 500 mJ/cm$^2$,,
   wherein a surface of the anti-reflective layer has an irregular uneven structure, and a surface of the uneven structure has an arithmetic mean roughness Ra of 0.01 to 1.00 $\mu$m and a mean unevenness period RSm of 1 to 30$\mu$m,
   the anti-reflective layer includes a low refractive index layer (14a) having a refractive index of 1.47 or less and a thickness of 50 to 200 nm at an outermost layer,
   a Young's modulus of the semi-cured product layer is 0.1 to 2.5 GPa, and a thickness of the semi-cured product layer after being fully cured is 1.0 to 10.0 $\mu$m,
   a percent elongation of the intermediate laminate is 105% to 150%, where the percent elongation is obtained when after warming the intermediate laminate to the vicinity of the Tg of the base material, the intermediate laminate is sandwiched between L-shaped bent male female molds so that the base material surface is on the concave side, and the male female molds are pressed and cooled, and when after cooling, the bent convex surface is observed with a microscope and the presence or absence of cracks is confirmed, and the same operation is performed by changing the bending radius (bending R), and the elongation to the bending R when no crack is generated is calculated, and

the ultraviolet-curable resin composition contains a tri- or lower functional urethane acrylate, a silane coupling agent, and a metal chelate compound.

2. The transparent substrate according to claim 1,
wherein the ultraviolet-curable resin composition further contains silica particles.

3. The transparent substrate according to claim 2,
wherein the ultraviolet-curable resin composition further contains a tetra- or higher functional urethane acrylate.

4. The transparent substrate according to any one of claims 1 to 3,
wherein the anti-reflective layer has a multi-layer structure including, in order from the base material side, a medium refractive index layer having a refractive index of more than 1.47 and less than 1.65 and a thickness of 50 to 120 nm, a high refractive index layer having a refractive index of 1.60 or more and higher than the refractive index of the medium refractive index layer and a thickness of 50 to 120 nm, and the low refractive index layer.

5. The transparent substrate according to any one of claims 1 to 4, further comprising:
a barrier layer provided between the base material and the semi-cured product layer, the barrier layer containing a tetra- or higher urethane acrylate and having a thickness of 50 to 200 nm.

6. A method for manufacturing a transparent substrate, comprising:

a step (b): a step of forming a semi-cured product layer (13s) on a base material by applying an ultraviolet-curable resin composition onto at least one surface of the base material (11) having light-transmitting properties and semi-curing the ultraviolet-curable resin composition so as to cause a thickness after full curing to be 1.0 to 10.0 $\mu$m;
a step (c): a step of obtaining an intermediate laminate (1) by forming an anti-reflective layer on the semi-cured product layer;
a step (d): a step of, using a transfer mold (30) having an irregular uneven structure on a transfer surface and having an arithmetic mean roughness Ra of the transfer surface of 0.01 to 1.25 $\mu$m and a mean unevenness period RSm of 1 to 30 $\mu$m, transferring the uneven structure of the transfer surface onto a surface of the anti-reflective layer of the intermediate laminate; and
a step (e): a step of fully curing the semi-cured product layer after the step (d),
wherein a Young's modulus of the semi-cured product layer is 0.1 to 2.5 GPa,
a percent elongation of the intermediate laminate is 105% to 150%, where the percent elongation is obtained when after warming the intermediate laminate to the vicinity of the Tg of the base material, the intermediate laminate is sandwiched between L-shaped bent male female molds so that the base material surface is on the concave side, and the male female molds are pressed and cooled, and when after cooling, the bent convex surface is observed with a microscope and the presence or absence of cracks is confirmed, and the same operation is performed by changing the bending radius (bending R), and the elongation to the bending R when no crack is generated is calculated, and
the step (c) includes at least a step (c-3) as follows,
the step (c-3): a step of forming a low refractive index layer (14a) having a refractive index of 1.47 or less and a thickness of 50 to 200 nm on the semi-cured product layer.

7. The method for manufacturing a transparent substrate according to claim 6,
wherein, in the step (b), the ultraviolet-curable resin composition is semi-cured by irradiating the ultraviolet-curable resin composition on the base material with ultraviolet rays by a cumulative light amount of 150 to 500 mJ/cm$^2$,

8. The method for manufacturing a transparent substrate according to claim 6 or 7,
wherein, in the step (d), the surface of the anti-reflective layer of the intermediate laminate is subjected to a pressurizing treatment and is transferred using the transfer mold at a pressure of 4 to 38 MPa and a temperature of 60°C to 150°C.

9. The method for manufacturing a transparent substrate according to any one of claims 6 to 8,
wherein the step (c) further includes a step (c-1) and a step (c-2) as follows before the step (c-3),
the step (c-1): a step of forming a medium refractive index layer having a refractive index of more than 1.47 and less than 1.65 and a thickness of 50 to 120 nm on the semi-cured product layer, and
the step (c-2): a step of forming a high refractive index layer having a refractive index of 1.60 or more and higher than the refractive index of the medium refractive index layer and a thickness of 50 to 120 nm on the medium refractive index layer.

10. The method for manufacturing a transparent substrate according to any one of claims 6 to 9, further comprising:

a step (a) as follows before the step (b),
the step (a): a step of forming a barrier layer containing a tetra- or higher urethane acrylate and having a thickness of 50 to 200 nm on the base material.

**Patentansprüche**

1. Transparentes Substrat (10), das durch vollständiges Härten einer halbgehärteten Produktschicht (13s) eines Zwischenlaminats (1) durch Bestrahlung mit ultravioletten Strahlen gebildet wird, wobei die kumulative Lichtmenge der ultravioletten Strahlen 800 bis 1200 mJ/cm$^2$ beträgt, wobei das Zwischenlaminat umfasst:

ein Basismaterial (11) mit lichtdurchlässigen Eigenschaften;
eine Antirefle-ionsschicht (14), die auf mindestens einer Oberfläche des Basismaterials vorgesehen ist, und die halbgehärtete Produktschicht, die zwischen dem Basismaterial und der Antirefle-ionsschicht vorgesehen ist und aus einem halbgehärteten Produkt einer ultraviolett-härtbaren Harzzusammensetzung gebildet ist, wobei die Harzzusammensetzung durch Bestrahlung der ultraviolett-härtbaren Harzzusammensetzung auf dem Basismaterial mit ultravioletten Strahlen durch eine kumulative Lichtmenge von 150 bis 500 mJ/cm$^2$ halbgehärtet wird,
wobei eine Oberfläche der Antirefle-ionsschicht eine unregelmäßige unebene Struktur aufweist, und eine Oberfläche der unebenen Struktur eine arithmetische mittlere Rauheit Ra von 0,01 bis 1,00 $\mu$m und eine mittlere Unebenheitsperiode RSm von 1 bis 30 $\mu$m aufweist,
die Antirefle-ionsschicht eine Schicht mit niedrigem Brechungsinde- (14a) mit einem Brechungsindevon 1,47 oder weniger und einer Dicke von 50 bis 200 nm an einer äußersten Schicht einschließt,
ein Elastizitätsmodul der halbgehärteten Produktschicht 0,1 bis 2,5 GPa beträgt, und eine Dicke der halbgehärteten Produktschicht nach dem vollständigen Aushärten 1,0 bis 10,0 $\mu$m beträgt,
eine prozentuale Dehnung des Zwischenlaminats 105 % bis 150 % beträgt, wobei die prozentuale Dehnung erhalten wird, wenn nach dem Erwärmen des Zwischenlaminats auf die Nähe der Tg des Basismaterials das Zwischenlaminat zwischen L-förmige gebogene Patrizen-Matrizen-Formen gelegt wird, so dass die Oberfläche des Basismaterials auf der konkaven Seite ist, und die Patrizen-Matrizen-Formen gepresst und abgekühlt werden, und wenn nach dem Abkühlen die gebogene konve-e Oberfläche mit einem Mikroskop beobachtet wird und das Vorhandensein oder Nichtvorhandensein von Rissen bestätigt wird, und derselbe Vorgang durchgeführt wird, indem der Biegeradius (Biegung R) geändert wird, und die Dehnung zur Biegung R, wenn kein Riss erzeugt wird, berechnet wird, und
die ultraviolett-härtbare Harzzusammensetzung ein tri- oder niedrigerfunktionelles Urethanacrylat, ein Silan-Kopplungsmittel und eine Metallchelatverbindung enthält.

2. Transparentes Substrat nach Anspruch 1,
wobei die ultraviolett-härtbare Harzzusammensetzung ferner Siliziumdio-idpartikel enthält.

3. Transparentes Substrat nach Anspruch 2,
wobei die ultraviolett-härtbare Harzzusammensetzung ferner ein tetra- oder höherfunktionelles Urethanacrylat enthält.

4. Transparentes Substrat nach einem der Ansprüche 1 bis 3,
wobei die Antirefle-ionsschicht eine mehrschichtige Struktur aufweist, die in der Reihenfolge von der Seite des Basismaterials eine Schicht mit mittlerem Brechungsinde- mit einem Brechungsinde- von mehr als 1,47 und weniger als 1,65 und einer Dicke von 50 bis 120 nm, eine Schicht mit hohem Brechungsinde- mit einem Brechungsinde- von 1,60 oder mehr und höher als der Brechungsinde- der Schicht mit mittlerem Brechungsinde- und einer Dicke von 50 bis 120 nm und die Schicht mit niedrigem Brechungsinde- einschließt.

5. Transparentes Substrat nach einem der Ansprüche 1 bis 4, ferner umfassend:
eine Sperrschicht, die zwischen dem Basismaterial und der halbgehärteten Produktschicht vorgesehen ist, wobei die Sperrschicht ein tetra- oder höheres Urethanacrylat enthält und eine Dicke von 50 bis 200 nm aufweist.

**6.** Verfahren zur Herstellung eines transparenten Substrats, umfassend:

einen Schritt (b): einen Schritt des Bildens einer halbgehärteten Produktschicht (13s) auf einem Basismaterial durch Auftragen einer ultraviolett-härtbaren Harzzusammensetzung auf mindestens eine Oberfläche des Basismaterials (11), die lichtdurchlässige Eigenschaften aufweist, und Halbhärten der ultraviolett-härtbaren Harzzusammensetzung, um zu bewirken, dass eine Dicke nach vollständigem Härten 1,0 bis 10,0 μm beträgt;
einen Schritt (c): einen Schritt des Erhaltens eines Zwischenlaminats (1) durch Bilden einer Antirefle-ionsschicht auf der halbgehärteten Produktschicht;
einen Schritt (d): einen Schritt des Übertragens der ungleichmäßigen Struktur der Übertragungsoberfläche auf eine Oberfläche der Antirefle-ionsschicht des Zwischenlaminats unter Verwendung einer Übertragungsform (30) mit einer unregelmäßigen unebenen Struktur auf einer Übertragungsoberfläche und mit einer arithmetischen mittleren Rauheit Ra der Übertragungsoberfläche von 0,01 bis 1,25 μm und einer mittleren Unebenheitsperiode RSm von 1 bis 30 μm; und
einen Schritt (e): einen Schritt des vollständigen Aushärtens der halbgehärteten Produktschicht nach dem Schritt (d), wobei ein Elastizitätsmodul der halbgehärteten Produktschicht 0,1 bis 2,5 Gpa beträgt, eine prozentuale Dehnung des Zwischenlaminats 105 % bis 150 % beträgt, wobei die prozentuale Dehnung erhalten wird, wenn nach dem Erwärmen des Zwischenlaminats auf die Nähe der Tg des Basismaterials das Zwischenlaminat zwischen L-förmige gebogene Patrizen-Matrizen-Formen gelegt wird, so dass die Oberfläche des Basismaterials auf der konkaven Seite ist, und die Patrizen-Matrizen-Formen gepresst und abgekühlt werden, und wenn nach dem Abkühlen die gebogene konve-e Oberfläche mit einem Mikroskop beobachtet wird und das Vorhandensein oder Nichtvorhandensein von Rissen bestätigt wird, und derselbe Vorgang durchgeführt wird, indem der Biegeradius (Biegung R) geändert wird, und die Dehnung zur Biegung R, wenn kein Riss erzeugt wird, berechnet wird, und
der Schritt (c) mindestens einen Schritt (c-3) wie folgt einschließt,
den Schritt (c-3): einen Schritt des Bildens einer Schicht (14a) mit niedrigem Brechungsinde- mit einem Brechungsinde- von 1,47 oder weniger und einer Dicke von 50 bis 200 nm auf der halbgehärteten Produktschicht umfasst.

**7.** Verfahren zur Herstellung eines transparenten Substrats nach Anspruch 6,
wobei in dem Schritt (b) die ultraviolett-härtbare Harzzusammensetzung durch Bestrahlung der ultraviolett-härtbaren Harzzusammensetzung auf dem Basismaterial mit ultravioletten Strahlen durch eine kumulative Lichtmenge von 150 bis 500 mJ/cm$^2$ halbgehärtet wird.

**8.** Verfahren zur Herstellung eines transparenten Substrats nach Anspruch 6 oder 7,
wobei in dem Schritt (d) die Oberfläche der Antirefle-ionsschicht des Zwischenlaminats einer Druckbehandlung unterzogen wird und unter Verwendung der Übertragungsform bei einem Druck von 4 bis 38 MPa und einer Temperatur von 60 °C bis 150 °C übertragen wird.

**9.** Verfahren zur Herstellung eines transparenten Substrats nach einem der Ansprüche 6 bis 8,
wobei der Schritt (c) ferner einen Schritt (c-1) und einen Schritt (c-2) wie folgt vor dem Schritt (c-3) einschließt,
den Schritt (c-1): einen Schritt der Bildung einer Schicht mit mittlerem Brechungsinde- mit einem Brechungsinde- von mehr als 1,47 und weniger als 1,65 und einer Dicke von 50 bis 120 nm auf der halbgehärteten Produktschicht, und
den Schritt (c-2): einen Schritt des Bildens einer Schicht mit hohem Brechungsinde- mit einem Brechungsinde- von 1,60 oder mehr und höher als der Brechungsinde- der Schicht mit mittlerem Brechungsinde- und einer Dicke von 50 bis 120 nm auf der Schicht mit mittlerem Brechungsinde-.

**10.** Verfahren zur Herstellung eines transparenten Substrats nach einem der Ansprüche 6 bis 9, ferner umfassend:

einen Schritt (a) wie folgt vor dem Schritt (b),
den Schritt (a): einen Schritt des Bildens einer Sperrschicht, die ein tetra- oder höheres Urethanacrylat enthält und eine Dicke von 50 bis 200 nm aufweist, auf dem Basismaterial.

**Revendications**

**1.** Substrat transparent (10) qui est formé par durcissement complet d'une couche de produit semi-durci (13s) d'un stratifié intermédiaire par irradiation avec des rayons ultraviolets, la quantité de lumière cumulée des rayons ultraviolets étant de 800 à 1200 mJ/cm$^2$, le stratifié intermédiaire comprenant :

un matériau de base (11) ayant des propriétés de transmission de la lumière,

une couche antireflet (14) disposée sur au moins une surface du matériau de base, et

la couche de produit semi-durci qui est disposée entre le matériau de base et la couche antireflet et qui est formée d'un produit semi-durci d'une composition de résine durcissable aux ultraviolets, la composition de résine étant semi-durcie par irradiation de la composition de résine durcissable aux ultraviolets sur le matériau de base avec des rayons ultraviolets en une quantité de lumière cumulée de 150 à 500 mJ/cm$^2$,

dans lequel une surface de la structure antireflet a une structure inégale irrégulière, et une surface de la structure inégale a une rugosité moyenne arithmétique Ra de 0,01 à 1,00 μm et une période d'inégalité moyenne RSm de 1 à 30 μm,

la couche antireflet comprend une couche à faible indice de réfraction (14a) ayant un indice de réfraction de 1,47 ou moins et une épaisseur de 50 à 200 nm en tant que la couche la plus extérieure,

le module de Young de la couche de produit semi-durci est de 0,1 à 2,5 GPa, et l'épaisseur de la couche de produit semi-durci après durcissement complet est de 1,0 à 10,0 μm,

le pourcentage d'allongement du stratifié intermédiaire est de 105 % à 150 %, lequel pourcentage d'allongement est obtenu quand, après réchauffement du stratifié intermédiaire au voisinage de la Tg du matériau de base, le stratifié intermédiaire est mis en sandwich entre des moules mâle-femelle incurvés en forme de L de façon que la surface du matériau de base soit du côté concave, et les moules mâle-femelle sont pressés et refroidis, et quand, après refroidissement, la surface convexe incurvée est observée au microscope et la présence ou l'absence de fissures est confirmée, et la même opération est effectuée avec un changement du rayon d'incurvation (R d'incurvation), et l'allongement au R d'incurvation quand aucune fissure n'est générée est calculé, et

la composition de résine durcissable aux ultraviolets contient un acrylate d'uréthane trifonctionnel ou de fonctionnalité inférieure, un agent de couplage au silane, et un composé chélatant les métaux.

2. Substrat transparent selon la revendication 1, dans lequel la composition de résine durcissable aux ultraviolets contient en outre des particules de silice.

3. Substrat transparent selon la revendication 2, dans lequel la composition de résine durcissable aux ultraviolets contient en outre un acrylate d'uréthane tétrafonctionnel ou de fonctionnalité supérieure.

4. Substrat transparent selon l'une quelconque des revendications 1 à 3, dans lequel la couche antireflet a une structure multicouche comprenant, dans l'ordre à partir du côté matériau de base, une couche à indice de réfraction moyen ayant un indice de réfraction supérieur à 1,47 et inférieur à 1,65 et une épaisseur de 50 à 120 nm, une couche à indice de réfraction élevé ayant un indice de réfraction de 1,60 ou plus et supérieur à l'indice de réfraction de la couche à indice de réfraction moyen et une épaisseur de 50 à 120 nm, et la couche à faible indice de réfraction.

5. Substrat transparent selon l'une quelconque des revendications 1 à 4, comprenant en outre une couche de barrière disposée entre le matériau de base et la couche de produit semi-durci, la couche de barrière contenant un acrylate d'uréthane tétrafonctionnel ou de fonctionnalité supérieure et ayant une épaisseur de 50 à 200 nm.

6. Procédé pour fabriquer un substrat transparent, comprenant :

étape (b) : une étape de formation d'une couche de produit semi-durci (13s) sur un matériau de base par application d'une composition de résine durcissable aux ultraviolets sur au moins une surface du matériau de base (11) ayant des propriétés de transmission de la lumière et de semi-durcissement de la composition de résine durcissable aux ultraviolets de façon que l'épaisseur après durcissement complet soit de 1,0 à 10,0 μm ;

étape (c) : une étape d'obtention d'un stratifié intermédiaire (1) par formation d'une couche antireflet sur la couche de produit semi-durci ;

étape (d) : une étape d'utilisation d'un moule de transfert (30) ayant une structure inégale irrégulière sur une surface de transfert et ayant une rugosité moyenne arithmétique Ra de la surface de transfert de 0,01 à 1,25 μm et une période d'inégalité moyenne RSm de 1 à 30 μm, et de transfert de la structure inégale de la surface de transfert sur une surface de la couche antireflet du stratifié intermédiaire ; et

étape (e) : une étape de durcissement complet de la couche de produit semi-durci après l'étape (d),

dans lequel le module de Young de la couche de produit semi-durci est de 0,1 à 2,5 GPa,

le pourcentage d'allongement du stratifié intermédiaire est de 105 % à 150 %, lequel pourcentage d'allongement est obtenu quand, après réchauffement du stratifié intermédiaire au voisinage de la Tg du matériau de base, le stratifié intermédiaire est mis en sandwich entre des moules mâle-femelle incurvés en forme de L de façon que la surface du matériau de base soit du côté concave, et les moules mâle-femelle sont pressés et refroidis, et quand, après refroidissement, la surface convexe incurvée est observée au microscope et la présence ou l'absence de fissures est confirmée, et la même opération est effectuée avec un changement du rayon d'incurvation (R d'incurvation), et l'allongement au R d'incurvation quand aucune fissure n'est générée est calculé, et l'étape (c) comprend au moins l'étape (c-3) suivante,

étape (c-3) : une étape de formation d'une couche à faible indice de réfraction (14a) ayant un indice de réfraction de 1,47 ou moins et une épaisseur de 50 à 200 nm sur la couche de produit semi-durci.

7. Procédé pour fabriquer un substrat transparent selon la revendication 6, dans lequel, dans l'étape (b), la composition de résine durcissable aux ultraviolets est semi-durcie par irradiation de la composition de résine durcissable aux ultraviolets sur le matériau de base avec des rayons ultraviolets en une quantité de lumière cumulée de 150 à 500 mJ/cm$^2$.

8. Procédé pour fabriquer un substrat transparent selon la revendication 6 ou 7, dans lequel, dans l'étape (d), la surface de la couche antireflet du stratifié intermédiaire est soumise à un traitement de pressurisation et est transférée par utilisation du moule de transfert sous une pression de 4 à 38 MPa et à une température de 60°C à 150°C.

9. Procédé pour fabriquer un substrat transparent selon l'une quelconque des revendications 6 à 8, dans lequel l'étape (c) comprend en outre une étape (c-1) et une étape (c-2) comme suit avant l'étape (c-3),

étape (c-1) : une étape de formation d'une couche à indice de réfraction moyen ayant un indice de réfraction supérieur à 1,47 et inférieur à 1,65 et une épaisseur de 50 à 120 nm sur la couche de produit semi-durci, et
étape (c-2) : une étape de formation d'une couche à indice de réfraction élevé ayant un indice de réfraction de 1,60 ou plus et supérieur à l'indice de réfraction de la couche à indice de réfraction moyen et une épaisseur de 50 à 120 nm sur la couche à indice de réfraction moyen.

10. Procédé pour fabriquer un substrat transparent selon l'une quelconque des revendications 6 à 9, comprenant en outre :

une étape (a) comme suit avant l'étape (b),
étape (a) : une étape de formation d'une couche de barrière contenant un acrylate d'uréthane tétrafonctionnel ou de fonctionnalité supérieure et ayant une épaisseur de 50 à 200 nm sur le matériau de base.

FIG. 1

# FIG. 2

## FIG. 3

**EP 3 505 979 B1**

**REFERENCES CITED IN THE DESCRIPTION**

**Patent documents cited in the description**

- JP 2016217349 A
- JP 2004033393 A
- US 20030234460 A1
- WO 2013153648 A1